# EUROPEAN PATENT APPLICATION

(11) **EP 2 509 003 A2**
(43) Date of publication of application: **10.10.2012**
(21) Application number: 12003732.0
(22) Date of filing: 08.03.2004
(51) Int. Cl.: G06F 17/22, G06F 17/27, G06F 17/21

(54) **Content processing device and corresponding method, program and record medium**

(30) Priority: 14.03.2003 JP 2003070556
(62) Divisional of application: 04718398.3
(71) Applicant: Sharp Kabushiki Kaisha, Osaka-shi, Osaka 545-8522 (JP)
(72) Inventor: Saiga, Hisashi, Nara-shi Nara 630-8305 (JP); Iwasaki, Keisuke, Ikomo-gun Nara 636-0154 (JP); Sawada, Yuji, Nara-shi Nara 630-8303 (JP); Kagechi, Kensaku, Nara-shi Nara 631-0023 (JP); Mitsutomi, Tomoo, Tenri-shi Nara 632-0004 (JP); Kadowaki, Motohiro, Soraku-gun Kyoto 619-0215 (JP)
(74) Representative: Müller - Hoffmann & Partner

(57) **Abstract**

A data processing device comprising: data storing means for storing data to be processed; and message output means for outputting a message based on details of processing during processing of said data read from said data storing means, said data includes locale identification information for identifying a region of possible use, and said message output means changes the message according to said locale identification information.

## Description

### Technical Field

The present invention relates to a content producing device and method, a content display device and method, a data processing device and method, a content display system, a program and a machine-readable record medium storing the program, and particularly, relates to a content producing device and method, a content display device and method, a data processing device and method, a content display system, a program and a machine-readable record medium storing the program for allowing output of characters in a content in a desired form.

### Background Art

In recent years, contents consisting of electronic data such as WWW (World Wide Web) electronic books have been rapidly developed according to progression of networking and improvement in technology of electronic devices. For providing contents, encoding of.characters is essential, and various encoding methods have been proposed and put into practical use. The shift JIS widely used in Japan is an example of such encoding method.

Meanwhile, character sets of glyphs of characters .have been standardized at national and international levels. For example, "JIS X 0201" and "JIS X 0208:1997" have been known as typical standards in Japan.

The character set itself can be defined as a set of glyphs of component characters, and character codes are usually assigned to the respective characters forming the character set. Thus, the encoding (i.e., the method of encoding the characters) is defined at the same time. However, the encoding is originally independent of the character set. For example, the encoding expressing "JIS X 0208" may be shift JIS encoding instead of the JIS code, and also Unicode can basically express it although a difference in correspondence may cause a problem.

Different character sets are defined in various countries and regions, respectively, and Unicode has been proposed as a typical attempt aiming at defining multilingual character code spaces (including multilingual characters), which can express all the different character sets, and is being put into practical use. Japanese Patent Laying-Open No. 2000-250897 has proposed a technique for ensuring consistency in expression form of characters outside a range of such characteristic sets.

However, the following problems still remain in the techniques already proposed.

### (First Problem)

It is difficult that a content producer defines a character set, and produces content data according to it. Almost all the conventional techniques are configured to use standard character sets as given sets, and are based on the premise that characters not included in the standard character sets are small in number and/or appear at a low frequency so that exceptional processing can be performed without substantially affecting whole efficiency.

For example, Japanese Patent Laying-Open No. 2000-250897 has disclosed a technique in which character codes outside a range of standard character sets are replaced with character codes included in the character sets, and reconversion is performed with external fonts when forming a file for display. This technique is not efficient in a situation that does not satisfy the premise relating to the standard character sets. For example, it is not rare that a terminal premised on the display of Japanese and a terminal premised on display of Korean cannot display characters which are required for display of the other language, and appear frequently in the other language. Therefore, exceptional processing is continually performed when a technique similar to the foregoing is employed.

In recent years, personal computers have employed a manner in which required information such as glyph is installed in advance in a terminal for the case of encoutering a language that cannot be displayed. This manner of dynamically changing the display ability of the terminal is practical for a user of the terminal. However, even when only one character of a foreign language is required in the content data, the above manner installs glyph data of other characters (and, in many cases, many characters) of the same foreign language, and therefore is inefficient. This is due to the fact that the above manner does no have a function of determining the specific character of the foreign language required for displaying the content data. For avoiding the above situation, it is effective that the content producer can define the character set.

For performing the definition, however, it is necessary to determine whether the character set designated by the content producer includes the characters included in the content data or not, when the content producer produces the content.

The character included in the content data may not be included in the intended character set due to an operation error. If distribution content data, which is content data to be distributed, is produced without fixing the above situation, this results in production of the distribution content data including character codes which cannot be originally used. However, the character set is defined by the content producer so that the conventional system cannot automatically perform the foregoing determination or check.

As described above, such a system is not yet proposed that allows the content producer to define the character set according to needs, and further can ensure the intended character codes of the distribution content.

### (Second Problem)

A policy of Unicode is that characters, which belong to different language but are deemed to have the same form, are integrated, and integration (Han-Unification) is effected on kanjis used in the Japanese, Chinese and Korean languages based on the above policy.

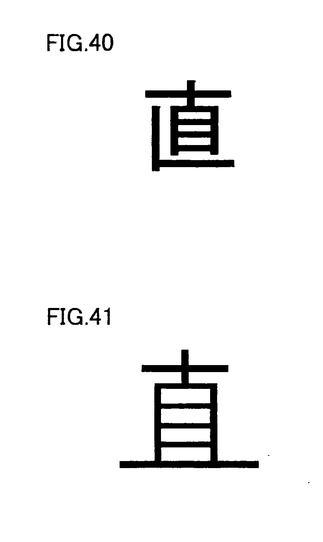

Ideally, it is desired that all the characters can be designated in each language only by giving character codes. In practice, however, different characters are integrated when viewed by a user of the characters. Figs. 40 and 41 illustrate an example. Fig. 40 illustrates glyph of a Japanese character corresponding to Unicode "0x76F4", and Fig. 41 illustrates a glyph of a Chinese character indicated by the same Unicode. In view of this example and others, when content data of different languages coexist, it is necessary to obtain, in any form, information (locale identification information) for identifying a country or region of possible use of distribution content data, and to display the glyph according to the obtained information.

However, many character sets already distributed have been used for the specific languages or regions, which are already acknowledged, as is apparent, e.g., from "JIS X 0208:1997" so that the distribution content data is not required to bear such identification information, and the above problem has not yet become significant.

However, in the case where the content producer defines a character set on a multilingual character code space, a terminal displaying the distribution content data may not correctly display the glyph intended by the content producer due to the influence by the Han-Unification already described. Until now, there is no technique which provides the above identification information together with the character set for overcoming the above problem.

### (Third Problem)

Generally, in conventional information processing devices, messages displayed by the system does not depend on data to be handled currently, but depends on the system. For example, if a user wishes to display a Spanish content, it can be usually considered that the user can sufficiently understood the Spanish language, but it is unclear whether the user understands the Japanese and English languages or not.

In the conventional manner, however, the system determines the language used for the display and, for example, the system based on English provides the message in English. Although there are many systems that have resources of various languages for manual selection, such a system has not yet proposed that displays a message by automatically selecting an appropriate language according to the data to be handled.

Accordingly, an object of the invention is to provide a content producing device and method for producing a content with a character set desired by a content producer as well as a program causing a computer to execute the above method, and a machine-readable record medium bearing the program.

Another object of the invention is to provide a content display device and method capable of displaying content data with reference to glyph data matching with a region of possible use of the content data, a program causing a computer to execute the above method and a machine-readable record medium bearing the program.

Still another object of the invention is to provide a data processing device and method providing a message relating to data processing in a manner, which allows recognition of the message in a region of possible data processing, when the data processing is performed, as well as a program causing a computer to execute the above method and a machine-readable record medium bearing the program.

### Disclosure of the Invention

A content producing device according to an aspect of the invention includes character set designating means for designating one or more character sets being a subset of a universal set of character codes; content output means for producing and outputting distribution content data being content data to be distributed based on details of described content data; and inspecting means for inspecting an inclusion relationship between a set formed of characters included in the content data and the one or more character sets designated by the character set designating means, and outputting information relating to a result of the inspection.

Accordingly, the character set can be designated for describing the content data so that a content producer can produce the content data while designating the desired character set.

When producing the content data, it is possible to check whether the character code used for describing the content data is included in the character set designated by the content producer or not. Therefore, it is possible to ensure that the content data includes the character code intended by the producer.

Preferably, the content producing device further includes character set content information input means for inputting information specifying the character code included in the one or more character sets. Therefore, the content producer can input the information specifying the desired character code.

Preferably, the content producing device further includes default character set storing means for storing information prepared in advance and specifying the character code included in a specific character set. Therefore, the content producer is not required to input the information specifying the character code of the character set used as a standard so that a quantity of required operation of the content producer can be reduced.

Preferably, the inspecting means allows overlap of the character set corresponding to each character set. Therefore, the content producer can produce the character set without giving attention to avoid the above overlap. This-reduces a load on the content producer at the time of inputting the information specifying the character code of the character set.

Preferably, the distribution content data includes character set identification information for identifying the one or more character sets designated by the character set designating means.

Therefore, at the time of distributing the content data which is described and produced, the distribution content data includes the character set identification information for identifying the one or more character sets designated at the time of production by the content producer.

Accordingly, at the destination of the content data, the character set designated in the distribution content data can be rapidly confirmed owing to the character set identification information of the distribution content data.

Preferably, the distribution content data includes glyph data corresponding to the one or more character codes included in the one or more character sets designated by the character set designating means. Accordingly, in the operation of describing and producing the content data, the glyph data for the content data can be included in the content data.

Preferably, the distribution content data includes locale identification information for identifying a region of possible use of the distribution content data.

Therefore, even in the case where the same character code is assigned to different items of the glyph data respectively corresponding to different regions, the glyph data for each region can be distinguished from the others according to the locale identification information distributed together with the content data. Accordingly, such a situation can be avoided that a character in the content is displayed at the distribution destination of the content data with a glyph different from that intended by the producer.

Preferably, the locale identification information corresponds to the character set identification information. Therefore, even in the case where the same character code is assigned to different items of the glyph data respectively corresponding to different regions, the glyph data for the distribution region of the character set can be determined owing to the locale identification information provided in a fashion corresponding to the character set.

Preferably, the inspecting means has usability determining means for determining whether each of the character codes describing the content data is a character code usable in the character code universal-set or not.

Therefore, it is determined at the time of producing the content whether each character code describing the content data is usable or not so that it is possible to avoid a situation that the content data includes an unusable character code.

The usability determining means preferably has a table bearing each of the character codes in the character code universal-set and corresponding usability/non-usability data indicating whether the character code is usable or not, searches the table based on each of the character codes describing the content data, and performs the determination based on the usability/non-usability data corresponding to the character code.

Accordingly, in the content producing process, it can be rapidly determined by referring to the table whether each character code describing the content data is usable or not.

Preferably, the content producing device further includes content data inspecting means for inspecting the content data described by a content producer; and content-production-time message output means for providing a message when the content data inspecting means finds a problem by inspection. Therefore, the content producer can view the message to determine the problem in the content data indicated by a result of the inspection.

Preferably, the message provided by the content-production-time message output means includes data of a portion related to a problem in the content data. Therefore, the content producer can confirm the problem while determining the data of the portion which forms the problem in the content data found by the inspection.

Preferably, when the content-production-time message output means provides as a message a data of a portion related to the problem in the content data, the content-production-time message output means expresses the message by using a predetermined another character set for a character included in one or more predetermined character sets or a complementary set of the one or more predetermined character sets.

Preferably, when the content-production-time message output means outputs the message including the data of the portion related to the problem in the content data, the content-production-time message output means expresses the message by using, for a character included in a predetermined specific character set or a complementary set of the specific character set, a character string including a character string indicating the character code of the above character.

Accordingly, even when the content producer does not currently know the specific character set to which a certain character belongs, the content producer can continue the description for the content data production.

According to another aspect of the invention, a content display device includes input means for inputting content data; and displayability determining means for determining that one or more character sets identified according to one or more items of character set identification information stored in the content data input by the input means are displayable when the one or more character sets has usable glyph data. When the displayability determining means determines that one of the one or more character sets is undisplayable, the device performs an operation different from an operation performed when the one or more character sets are all determined displayable. By performing the different operation, therefore, it becomes clear that reference is made to glyph data which is unusable in the distribution content data.

Preferably, when one of the character sets is determined undisplayable, display of the distribution content data or information based on the distribution content data is interrupted. Therefore, such a situation can be avoided that the content data is displayed while the glyph data is not specified.

Preferably, the device further includes message output means for providing a message when one of the one or more character sets is determined undisplayble. Therefore, it is possible to notify by the message of the fact that the glyph data required for displaying the content data cannot be specified.

Preferably, the message output means changes the message according to details of the locale identification information when the character set is determined undisplayable.

Preferably, when the content display device has not stored the glyph data corresponding to each of the one or more character sets identified according to the character set identification information, an operation of externally obtaining the corresponding glyph data starts. Therefore, the glyph data, which could not be specified, can be externally obtained.

According to still another aspect of a invention, the data processing device includes data storing means for storing data to be processed; and message output means for outputting a message. The data to be processed includes locale identification information for identifying a region of possible use of the data, and the message output means changes the message according to the locale identification information. In the data processing operation in a different region, therefore, the message can be changed depending on the region.

According to yet another aspect of the invention, a content display system includes content producing means for inspecting described content data, and outputting distribution content data based on the described content data; and content display means for receiving the distribution content data, and displaying information based on the distribution content data. The content producing means includes character set information input means designating contents of a character set being a subset of a universal set of the character codes and used for describing the content data, and means outputting information relating to an inclusion relationship between a set formed of characters included in the described content data and the character set designated by the character set information input means.

According to a further aspect of the invention, a content producing method includes a character set designating step of designating one or more character sets each being a subset of a universal set of character codes; a content output step of outputting distribution content data based on details of described content data; and an inspection step of inspecting an inclusion relationship between a set formed of characters included in the content data and the one or more character sets, and providing information relating to a result of the inspection.

According to a further aspect, the invention provides a program causing a computer to execute the foregoing content producing method, and also provides a computer-readable record medium storing the above program.

According to a further aspect of the invention, a content display method for displaying content data or information based on the content data includes an input step of inputting the content data; a displayability determining step determining whether a character set identified according to character set identification information stored in the content data input in the input step is displayable or not, based on whether glyph data of the character sets is usable or not; and a step of performing an operation different from an operation performed when each of the character sets is determined displayable, when one of the character sets is determined undisplayable.

According to a further aspect, the invention provides a program causing a computer to execute the foregoing content display method, and also provides a computer-readable record medium storing the program.

According to a further aspect of the invention, a data processing method includes a reading step of reading processing target data to be processed from storing means prepared in advance; and a message output step of providing a message. The processing target data read in the reading step includes locale identification information for identifying a region of possible use, and the message to be provided is changed according to details of the locale identification information in the message output step.

According to a further aspect, the invention provides a program causing a computer to execute the foregoing data processing method, and also provides a computer-readable record medium storing the program.

### Brief Description of the Drawings

Fig. 1 schematically illustrates a content display system of a first embodiment of the invention.
Fig. 2 illustrates an example of a structure of a content producing device.

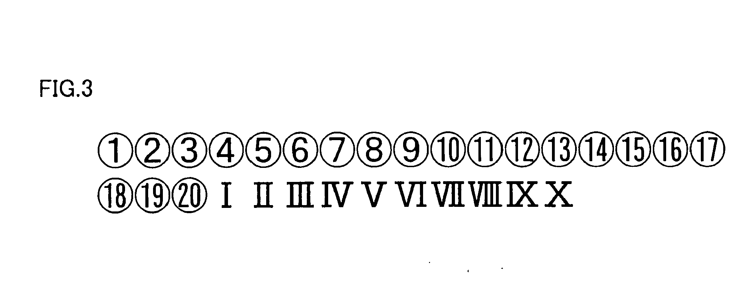

Fig. 3 illustrates characters expressed by Unicode "2460" - "2473" and "2160" - "2169".
Fig. 4 is a flowchart of an operation of producing a distribution content data with a content producing device by a content producer.
Figs. 5A, 5B and 5C illustrate, by way of example, description of a content and characters used therein.
Fig. 6 illustrates another example of the description of content.
Fig. 7 illustrates an example of character set content information corresponding to a character set "CIRCLED_NUM".
Fig. 8 illustrates an example of character set content information corresponding to a character set "MISC_KANJI".
Fig. 9 illustrates an example of character set information.
Fig. 10 illustrates another example of the character set information.
Fig. 11 illustrates still another example of the character set information.
Fig. 12 illustrates an example of display of a content display device.
Fig. 13 illustrates a structure of a converting unit 411.
Fig. 14 is a flowchart illustrating an operation of converting unit 411 in step S505.
Fig. 15 is a block diagram of a character code inspecting unit 1302.
Fig. 16 illustrates a structure of a disabled region table.
Fig. 17 is a flowchart illustrating an operation of character code inspecting unit 1302 in step S1405.
Fig. 18 illustrates an example of character set content information corresponding to a character set "MISC_KANJI".
Fig. 19 illustrates an example of a data structure of glyph data archived in step S1406.
Fig. 20 illustrates a structure of an error message output unit 1306.
Fig. 21 is a flowchart of processing of error message output unit 1306 in step S1408.
Fig. 22 illustrates an example of a partial character string of content data corresponding to a position of occurrence of a problem that correspondence is not archived between start and end tags.
Fig. 23 illustrates an example of contents of a character string memory 1502.
Fig. 24 illustrates an example of contents of an error message table 1504.
Fig. 25 illustrates an example of an error message.
Fig. 26 is a flowchart of processing of an error message output unit 1306 in step S1409.
Fig. 27 illustrates a structure of a content distributing device 303.
Fig. 28 is a flowchart illustrating an operation of content distributing device 303.
Fig. 29 is a block diagram of a content display device 305.
Fig. 30 is a flowchart illustrating an operation of content display device 305 during content reproduction.
Fig. 31 illustrates a structure of a character set processing unit 2408.
Fig. 32 illustrates an example of information of a character set which can be displayed by content display device 305.
Fig. 33 is a flowchart illustrating an operation of a character set processing unit 2406 in step S2503.
Fig. 34 illustrates an example of data stored in a used character set table 2602 corresponding to a sample content.
Fig. 35 illustrates an example of contents of a displayable character set table 2604.
Fig. 36 illustrates an example of contents of an error message table 2606.
Fig. 37 illustrates an example of description of content data.
Fig. 38 illustrates a concept of an error message table in a third embodiment.
Fig. 39 illustrates a hardware structure of a computer according to a fourth embodiment.
Fig. 40 illustrates different glyphs assigned to a common conventional character code.
Fig. 41 illustrates different glyphs assigned to a common conventional character code.

### Best Modes for Carrying Out the Invention

Embodiments of the invention will now be described. In the following description, "characters" include symbols and numerals unless otherwise specified. A "character code space" is an universal set of multiple kinds of character sets, and each character set is a subset of the character code space.

### <First Embodiment>

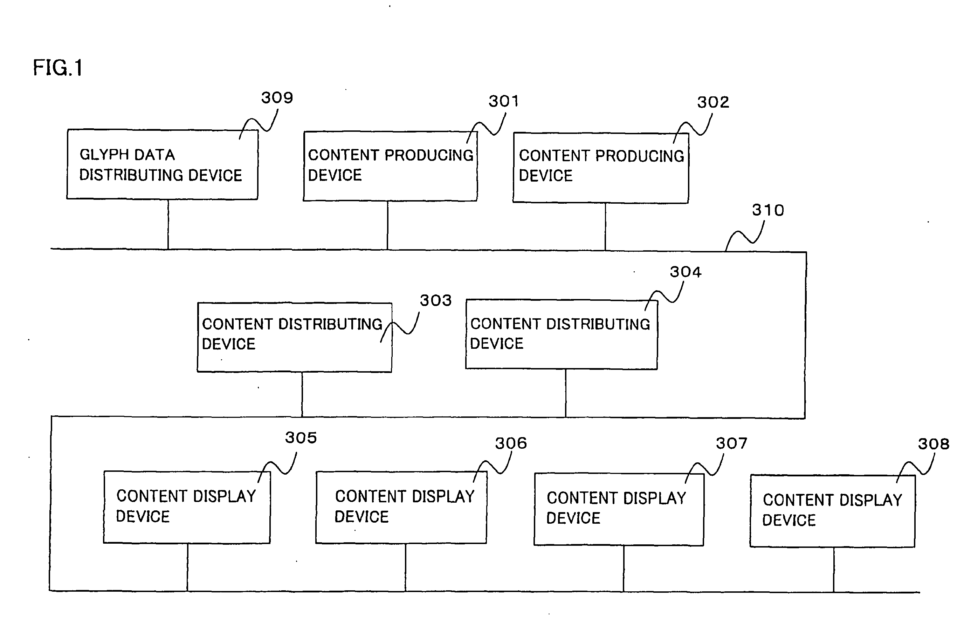

Fig. 1 schematically illustrates a content display system of a first embodiment of the invention. The content display system is formed of content producing devices 301 and 302, content distributing devices 303 and 304, content display devices 305 - 308 and a glyph data distributing device 309. These devices perform mutual communication via a communication line 310. For the sake of brevity, the following description will be given on the case where the content display system includes only one glyph data distributing device. However, operations of a system including two or more glyph data distributing devices will be easily understood from the following description. The numbers of glyph data distributing devices as well as other various devices in the figure are not essentially restricted.

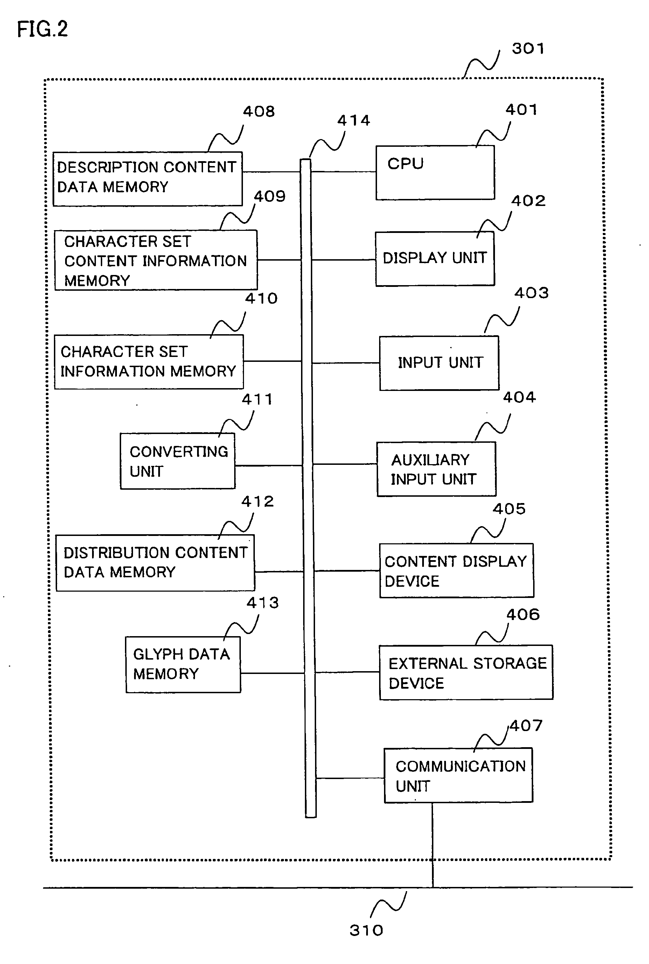

Fig. 2 illustrates an example of a structure of content producing device 301. Content producing device 302 has the same structure and function as content producing device 301. Content producing device 301 includes a CPU (Central Processing Unit) 401, a display unit 402, an input unit 403, an auxiliary input unit 404, a content display device 405, an external storage device 406, a communication unit 407, a description content data memory 408, a character set content information memory 409, a character set information memory 410, a converting unit 411, a distribution content data memory 412, a glyph data memory 413 and a data bus 414 mutually connecting them for communication.

Display unit 402 may be formed of a display and a display circuit. Input unit 403 and auxiliary input unit 404 may be a keyboard and a mouse, respectively. Content display device 405 has the same structure and function as content display device 305 which will be described later. Therefore, it should be noted that content display device 405 performs the display independently of display unit 402.

Content producing device 301 has a structure extremely similar to a personal computer connected to content display device 405 and software running on the personal computer. In content producing device 301, it is assumed that display unit 402 can display characters included in "JIS X 2101" and "JIS X 2108:1997" as well as characters indicated by Unicode "2460" - "2473" and "2160" - "2169". A character set formed of characters, which can be displayed by display unit 402 in content producing device 301, will be referred to as a "character set displayable by content producing device 301" hereinafter. Also, characters included in the character set displayable by the content display device may be referred to as the "characters displayable by the content display device". The character set displayable by content producing device 301 does not necessarily match with the characters which can be displayed by content display devices 305 - 308 and 405. This is natural particularly in the case where content display devices 305 - 308 and 405 are implemented by hardware of a kind different from that of content producing device 301.

Many specific operations among those performed for producing data by the content producer are not essential in the invention, and can be easily understood on the analogy of a usual personal computer so that these will now be described in detail unless necessary.

In the following description, it is assumed that the character code space of 16-bit Unicode is employed, and other character sets are subsets thereof. However, this is only by way of example, and does not restrict the substance of the invention.

In the following description, the characters and character strings are expressed by 16-bit Unicode within the device unless otherwise specified. Unless particularly necessary, a file name will not be specified for the sake of brevity. In the following description, "saving" means writing of data or information as a file from a memory into an external storage device, and "loading" means reading of contents of the file from the external storage device into the memory.

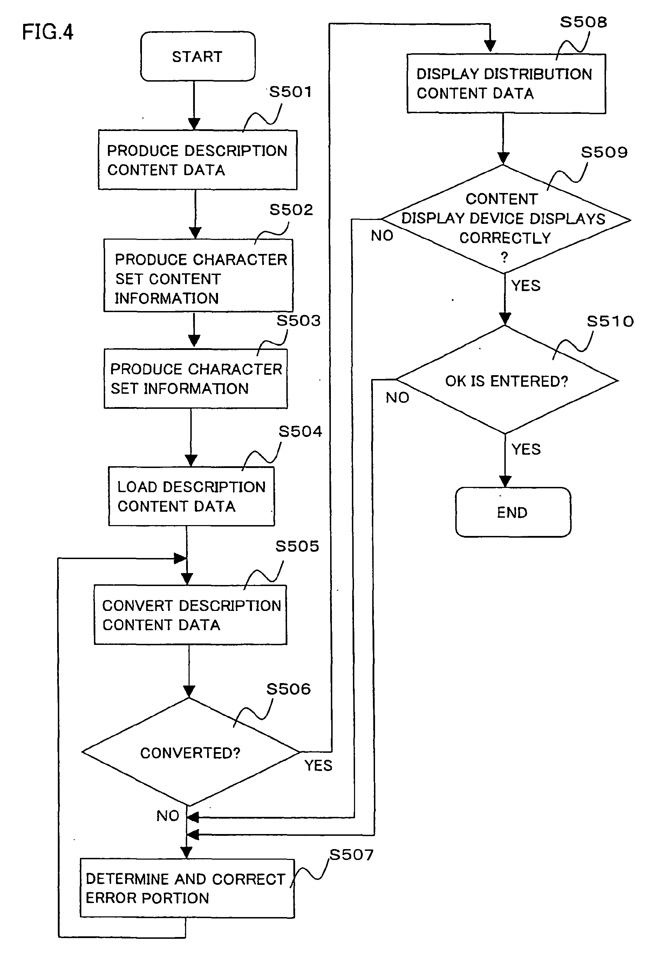

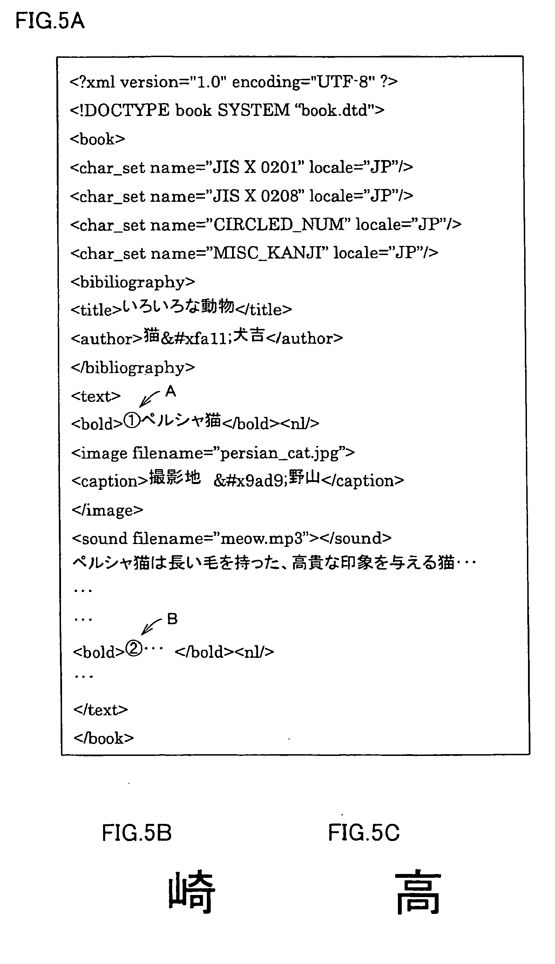

Fig. 4 is a flowchart illustrating processing of producing the distribution content by the content producer with content producing device 301. Figs. 5A - 5C illustrate examples of description content data and characters used therein. Referring to these figures, the operations of content producing device 301 will now be described in detail.

The content producer operates input unit 403 or auxiliary input unit 404 to produce the description content data expressing description of the content in description content data memory 408, and saves the description content data thus produced in external storage device 406 (step S501). It is now assumed that the description content data is described as illustrated in Fig. 5A according to the format of predefined XML (eXtensible Markup Language). The content data produced according to this example will be referred to as a "sample content". This will be used in the following description. However, the invention is not restricted to the content data described in XML. The content producer edits the description content data displayed on display unit 402 as illustrated in Fig. 5A with input unit 403 or auxiliary input unit 404.

Referring to Fig. 5A, a <book> tag and a child element (a portion between <book> and </book>) may be referred to as "content text data" in the following description.

The format in Fig. 5A will now be described briefly only in a range which will be required later. As can be seen from a DOCTYPE statement in line 2, this content display system uses a Document Type Definition (DTD) file referred to as "BOOK.DTD". All the content data handled by this content display system share this document type definition file.

An <author> tag represents a name of an author, which is expressed by a character string of the child element. In particular, "&#xfall;" in the child element of the <author> tag is in the format which is referred to as "character reference" (and will be referred to as a "character reference format" hereinafter), and indicates a character expressed by Unicode named "fall". This indicates a variant of the character in Fig. 5B, i.e., a character having a glyph different from that of the character in Fig. 5B included in "JIS X 2108:1997". The content producer uses this format when entering the characters not included in the character set displayable by content producing device 301 such as characters expressed by Unicode "fall". As will be described later, it is allowed to write even the characters displayable by content producing device 301 in the character reference format, as will be described later.

A test tag <test> indicates a text, and the character string of the child element is a text body. In particular, attention must be given to circled characters which are indicated by arrows with "A" and "B", respectively, and are included in neither "JIS X 2101" nor "JIS X 2108:1997".

An <image> tag indicates an image displayed together with the content text data. A "filename" attribute indicates a file name of the displayed image. A <caption> tag, which is a child tag of the <image> tag, indicates a text displayed together with the image, and a character string of its child element expresses the text to be displayed. In particular, "髙". which is a child element of the <caption> tag indicates a character of Unicode "9ad9" in the character reference format. This indicates a variant of the character in Fig. 5C, i.e., a character having a glyph different from that of the character in Fig. 5C included in "JIS X 2108:1997". This manner of expression is employed because the character of Unicode "9ad9" is not included in the character set displayable by content producing device 301. It is assumed that the content producer prepares files of images included in this example of description.

A <sound> tag indicates a file name of audio data to be reproduced together with the content text data, and a "filename" attribute indicates a file name of the audio data to be reproduced.

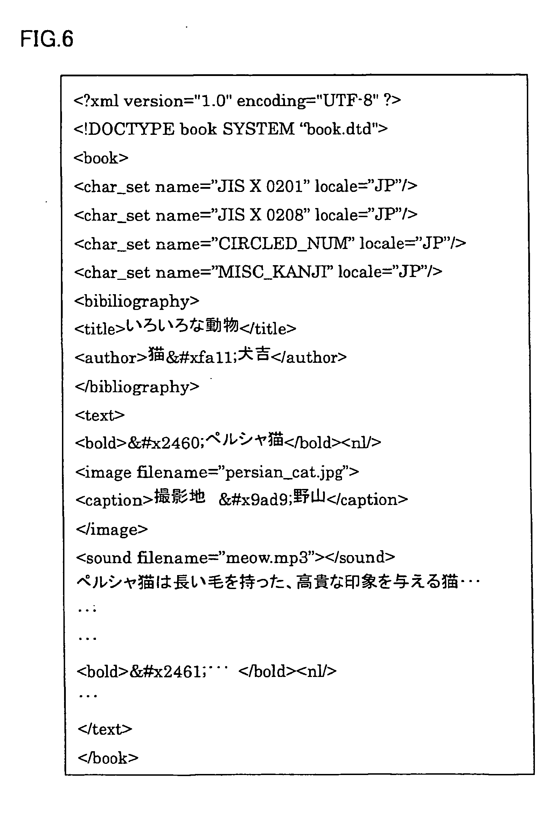

In the example of Fig. 5A, only the characters, which are not included in the character set displayable by content producing device 301, are described in the character reference format. In content producing device 301, however, it is allowed to write even the characters, which are included in the character set displayable by content producing device 301, in the character reference format. In the example of Fig. 6, circled numerals expressed by Unicode "2460" and "2461" are described in the character reference format although these characters are displayable by content producing device 301.

Content producing device 301 configured to allow the description in the above manner has the following advantage. The content producer can continue the description of the content by describing it in the character reference format even when it is unclear whether a certain character is displayable by content producing device 301 or not, and such determination is not required on an as-needed basis.

In this example, the manner generally used in XML is used for expressing the character, which is not included in the character set displayable by content producing device 301, by the character set. However, regardless of whether the content is described in the XML format or not, the format is not restricted to the character reference format used in this example. Another format can effectively function provided that the format has rules of uniquely expressing the character, which is not included in the character set displayable by content producing device 301, with a combination of characters included in the displayable character set, and allows restoring of the original character code by content display device 405. In the following description, description of characters without performing such expression may be described as "direct description of characters" or the like.

This example uses four kinds of character sets "JIS X 2101 ", "JIS X 2108", "CIRCLED_NUM" and "MISC_KANJI".

The character set "JIS X 2101" is literally defined by "JIS X 210.1 ", and includes alphanumeric characters, symbols and hankaku (single-width) katakanas, each of which is generally expressed by one byte in the field of the personal computer.

The character set "JIS X 2108" is literally defined by "JIS X 2108:1997", and substantially corresponds to kanjis, zenkaku (double-width) alphanumeric characters, zenkaku hiraganas and zenkaku katakanas of JIS level 1 and level 2 in the field of the personal computer.

The character set "CIRCLED NUM" as well as its name are defined by the content producer, and this character set is a collection of circled numerals 1, 2, 3, ..., 20, e.g., indicated by arrows A and B in Fig. 5A.

The character set "MISC_KANn" as well as its name are likewise defined by the content producer, and this character set is a collection of kanjis such as a variant in Fig. 5C which are important in this content data, but are included in neither "JIS X 2101" nor "JIS X 2108".

In the following description, the "standard character set" means "JIS X 2101" or "JIS X 2108". The concept of the standard character set is for utilizing the character set, which is frequently used in a specific region, with fewer efforts and operations in this region, and does not restrict the use of the content display device, content producing device and content distributing device in other regions.

In the following description, the character set "JIS X 2101" or "JIS X 2108" is the standard character set because it is premised that these sets are used in Japan. In a country or region other than Japan, a character set, which is frequently used in the country or region in question, can be appropriately determined as the standard character set, whereby the following description can be applied.

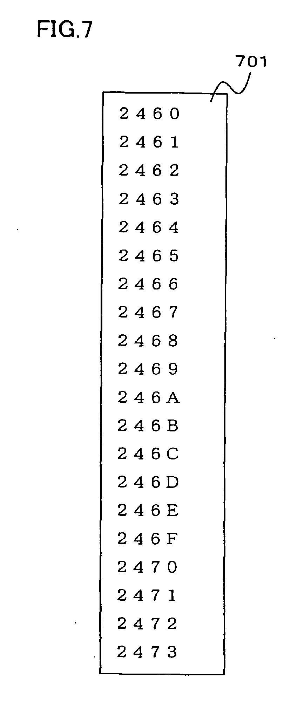

Then, the content producer operates input unit 403 or auxiliary input unit 404 to produce character set content information on character set content information memory 409, and saves the character set content information thus produced in external storage device 406 (step S502). In the character set content information of this example, Unicode of the characters included in the character set is written in such a manner that one character expressed in hexadecimal is written in each line. Fig. 7 illustrates an example of character set content information 701 corresponding to the character set "CIRCLED_NUM". Character set content information 701 includes Unicode "2460" to "2473" corresponding to circled numerals "1" - "20", e.g., indicated by arrows A and B in Fig. 5A.

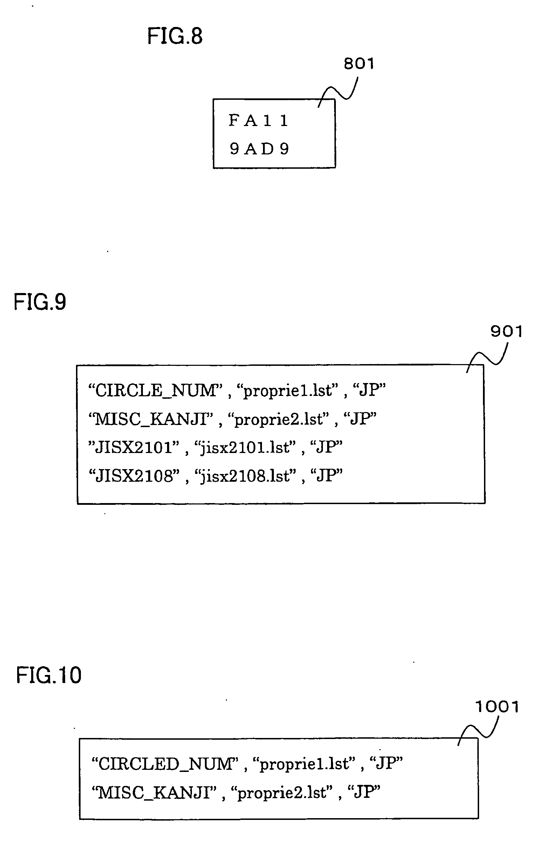

Fig. 8. illustrates an example of character set content information 801 corresponding to the character set "MISC_KANJI". Character set content information 801 includes a Unicode "9AD9" corresponding to a variant of the character in Fig. 5C and a Unicode "FA11" corresponding to a variant of the character in Fig. 5B.

It can be considered that the standard character set is used frequently in the content data aimed at the use in Japan, and therefore the character set content information corresponding to "JIS X 2101" and "JIS X 2108" are stored in advance as read-only files named "jisx2101.lst" and "jisx2108.1st" in external storage device 406. This reduces efforts of the content producer producing the character set content information.

For the standard character set, content producing device 301 may be configured similarly to the character set produced by the content producer, and more specifically, content producing device 301 may be configured on the precondition that the content producer produces the corresponding character set content information, and stores the produced character set content information in external storage device 406. This configuration naturally falls within a scope of the invention.

Referring to the example of Fig. 5A again, a <char_set> tag gives a character set name of the attribute and locale identification information included in character set information which will be described later.

In step S502, the content producer stores the character set content information corresponding to "CIRCLED_NUM" with a file name "proprie1.lst" in external storage device 406. Likewise, the content producer stores the character set content information corresponding to "MISC_KANJI" with a file name "proprie2.lst" in external storage device 406. Then, the content producer operates input unit 403 and auxiliary input unit 404 to produce character set information 901 on character set information memory 410 (step S503).

Character set information 901 is text data having a structure illustrated in Fig. 9. Each line in character set information 901 includes a character string representing the name of the character set and enclosed in quotes, a character string representing the file name of the character set content information produced in step S502 and enclosed in quotes, and a character string representing the locale identification information and enclosed in quotes, and these are separated by commas to provide a so-called CSV (Comma-Separated Variable) data.

As already described in connection with the second problem, the locale identification information is employed for determining from the locale identification information the situation that different glyphs correspond to the same character code. In this example, expression of a country's name in two characters defined by "ISO 3166" is used as the locale identification information. For example, Japan, U.S.A. and Spain are expressed by "JP", "US" and "ES" according to this expression, respectively. As an another example, a language code defined by "ISO 639" or the like may be used to archive an appropriate function. Other codes can further be used by defining operations of content display devices 305 - 308 and 405 which will be described later.

In connection with the information of the standard character set, content producing device 301 may be configured to deem that the information of the standard character set is described, even when the content producer has not clearly described it in the character set information. Fig. 10 is another example of the structure of the character set information corresponding to content producing device 301. Character set information 1001 in Fig. 10 includes only the information corresponding to the character set defined by the content producer. In character set information 1001, the content producer is not required to describe the information about the standard character set, and this reduces efforts of the content producer, and can prevent an error when forming the content.

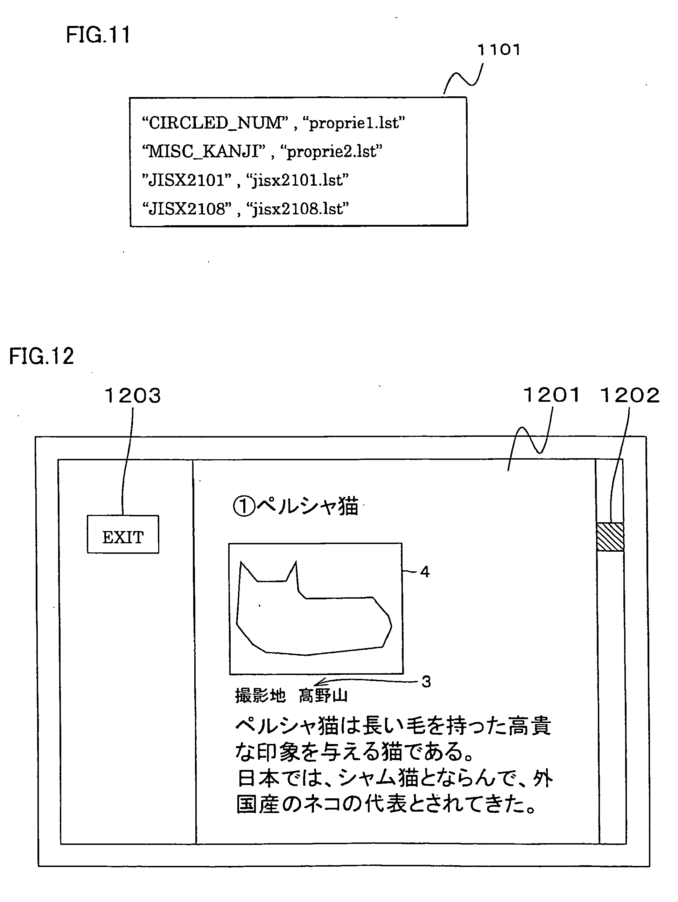

In this example, the locale identification information is included in the character set information for expressing it. However, when the content display system is used in a region and/or with a language tacitly accepted, it is not necessary to clearly express the locale identification information in the character set information. An example of the character set information is illustrated in Fig. 11. Each line in character set information 1101 of Fig. 11 includes a character string representing the name-of character set and enclosed in quotes as well as the character string representing the file name of the - character set content information produced in step S502 and enclosed in quotes, but does not include the locale identification information. When the character set has the structure in Fig. 11, content display devices 305 - 308, which will be described later, operate based on the tacit assumption that the content data is directed to a specific region or language.

Then, the description content data is loaded from eternal storage device 406 into description content data memory 408 (step S504). In this operation, information is also loaded from external storage device 406 into character set content information memory 409 and character set information memory 410. The character set content information of "jisx2101.1st" and "jisx2108.1st", which.have been initially stored as the files in external storage device 406, is likewise loaded into character set content information memory 409.

Then, converting unit 411 converts the description content data into the distribution content data for distribution, and saves it in external storage device 406 (step S505).

Various kinds of conversion processing may be performed in step S505 depending on the forms of the description content data and distribution content data as well as a relationship between the description format data and the distribution content data, although not described in detail.

CPU 401 determines whether the conversion in step S505 succeeded or not (step S506), and performs next processing in step S508 when it succeeded. When it did not succeed, CPU 401 displays a message on display unit 402, and the content producer determines and corrects an error or the like (step S507). Thereafter, CPU 401 performs the processing in step S505 again.

In step S508, CPU 401 reads the distribution content data from external storage device 406, and displays the read distribution content data on content display device 405 (step S508).

Fig. 12 illustrates an example of display on content display device 405. The structure and operation of content display device 405 are substantially the same as those of content display device 305 which will be described later. Distribution content data is displayed in a content window 1201. It is noted that the character (variant in Fig. 5C) written in the character reference format according to the description content data in Fig. 5A is displayed after being converted into a type face indicated by an arrow 3 in Fig. 12. A portion corresponding to the <image> tag in the description content data of Fig. 5A is displayed as an image 4. A scroll bar 1202 is used by the content producer for scrolling the displayed image. When an EXIT button 1203 is pressed, content display device 405 terminates the display. However, EXIT button 1203 is not used in step S508.

When content display device 405 is performing correct display (YES in step S509), the process proceeds to step S510. Otherwise, the processing returns to step S507. "CORRECT DISPLAY" in step S509 means the case where the processing of content display device 305 (described later) ends via step S207.

When "OK" is entered via auxiliary input unit 404 (step S510), the processing ends. When other information is entered, the processing returns to step S507.

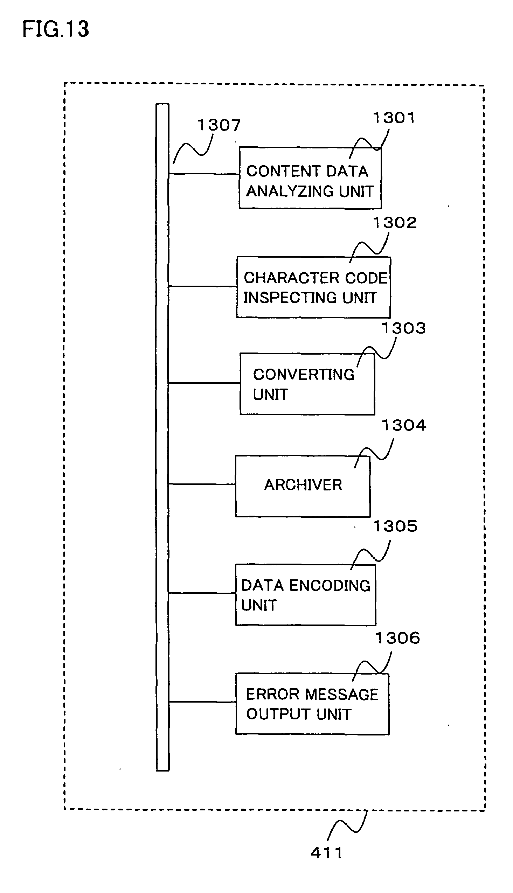

Description will now be given on the structure of converting unit 411 and the operation in step S505. Referring to Fig. 13, converting unit 411 includes a content data analyzing unit 1301, a character code inspecting unit 1302, a converting unit 1303, an archiver 1304, a data encoding unit 1305, an error message output unit 1306 and a data bus 1307 mutually connecting these units and portions.

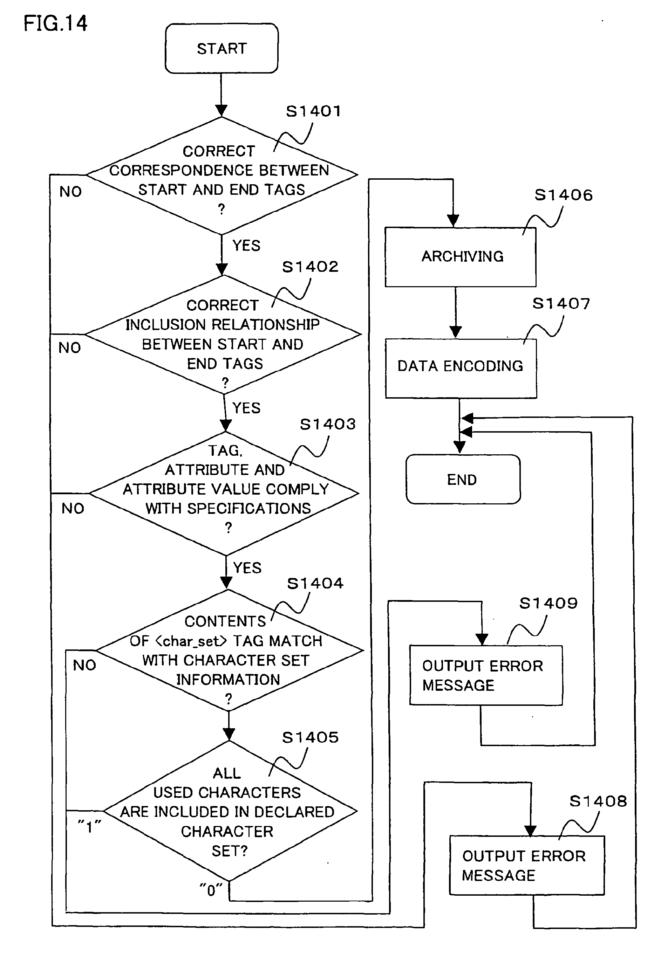

An operation of converting unit 411 in step S505 will now be described according to a flowchart of Fig. 14. First, content data analyzing unit 1301 inspects the content text data stored in description content data memory 408 for correct correspondence between the start and end tags (step S1401). When the correct correspondence is present, the process proceeds to step S1402. Otherwise, the process proceeds to step S1408.

Then, content data analyzing unit 1301 inspects the content data stored in description content data memory 408 for a correct nesting relationship between the start and end tags (step S1402). When the correct relationship is present, the process proceeds to step S1403. Otherwise, the process proceeds to step S1408.

The processing from step S1401 to step S1402 is performed for verifying that the input XML file is well-formed, This processing is performed by a usual XML processor, and is not essential in the invention so that detailed description thereof will now be performed.

Then, content data analyzing unit 1301 determines whether the tag, attribute and attribute value included in the content data stored in description content data memory 408 comply with specifications or not, using document type definition file BOOK.DTD (step S1403). If these comply with the specifications, the process proceeds to step S1404. Otherwise, the process proceeds to step S1408.

The processing in step S1403 corresponds to determination of whether the content data is a valid XML document or not. This processing is likewise performed by the usual XML processor, and is not essential in this invention so that detailed description thereof will not be performed.

Then, content data analyzing unit 1301 determines whether a "name" attribute and a "locale" attribute of a <char_set> tag of the content data stored in description content data memory 408 match with the contents of character set information memory 410 or not (step S1404). When these match with the contents, the process proceeds to step S1405. Otherwise, the process proceeds to step S1409.

In step S1404, it is determined whether a set of combinations each formed of the character set name and the locale identification information included in each line of character set information memory 410 matches with a set of combinations of <name> attributes and "locale" attributes of <char_set> tags in the content data or not.

Then, character code inspecting unit 1302 inspects each character set for determining whether the character code used in the content text data stored in description content data memory 408 is included in one of the character sets used in this content and obtained from character set information memory 410 or not (step S1405). An operation of character code inspecting unit 1302 in step S1405 will be described later. When character code inspecting unit 1302 returns an end code of "0", the process proceeds to step S1406. When it returns the end code of " 1 ", the process proceeds to step S1409.

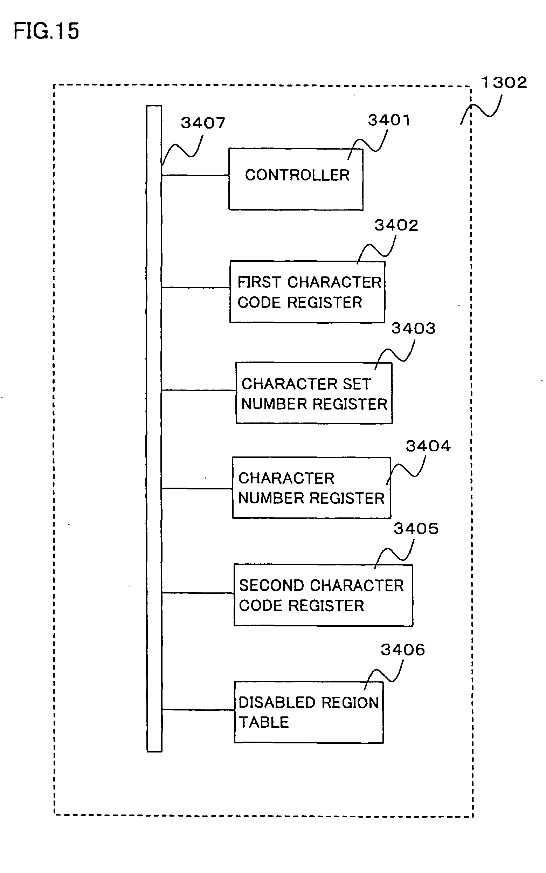

Fig. 15 is a block diagram of character code inspecting unit 1302. Character code inspecting unit 1302 includes a controller 3401, a first character code register 3402, a character set number register 3403, a character number register 3404, a second character code register 3405 and a disabled region table 3406 controlled by controller 3401 as well as a data bus 3407 mutually connecting these units and portions.

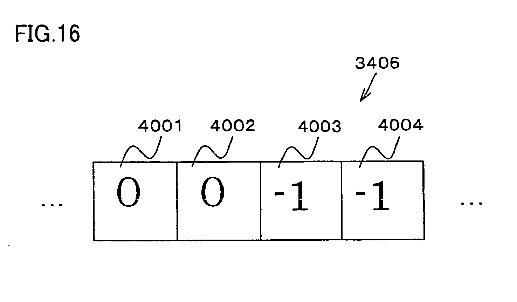

Disabled region table 3406 stores 65536 values of integers. In this table, "-1" is stored as a "k"th element (counted from "0") when a character code "k" is in a disabled region, which cannot be used in the character code system (Unicode in this example) of this character code "k". Otherwise, "0" is stored. In this example, "-1" is stored as each of "0xFFFF"th, "0xFFFE"th, "0xFEFF"th and "0xE000"th to "0xF8FF"th elements in hexadecimal, and "0" are stored in other elements. Fig. 16 illustrates an example of a partial structure of the above table. An element 4001 is the "0xDFFE"th element, and does not belong to the above disabled region so that 0 is stored as element 4001. An element 4002 is the "0xDFFF"th element, and 0 is likewise stored as element 4002. An element 4003 is the "0xE000"th element, and belongs to the above disabled region so that -1 is stored as element 4003. An element 4004 is the "0xE001 "th element, and -1 is likewise stored as element 4004. This means that the character codes included in regions referred to as non-character, PUA (Private Use Area) and BOM (Byte Order Mark) are disabled.

Naturally, contents of the table change depending on a specific portion which is disabled in the character code region. The table manner for the determination is not essential, but a result of determination can be obtained only by accessing the table with the character code so that determination at high processing efficiency can be performed. Also, determination conditions can be changed easily. Therefore, the table manner is preferable when the number of types of the values fall within a range allowing tabling.

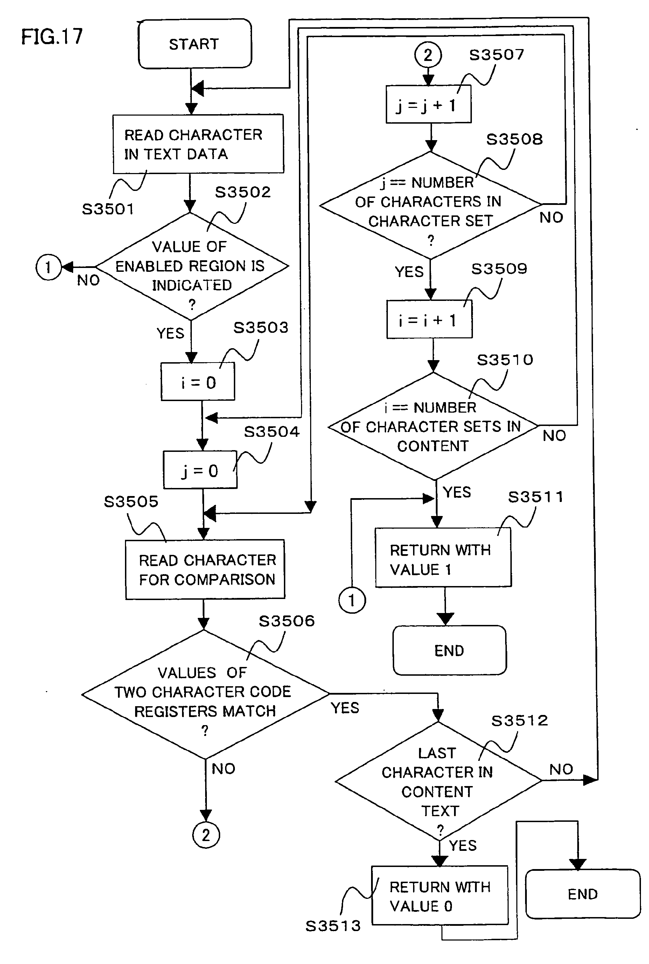

According to a flowchart of Fig. 17, description will now be given on the operation of character code inspecting unit 1302 in step S1405. First, controller 3401 receives a character code of one character in the content text data from content analyzing unit 1301, and stores it in first character code register 3402 (step S3501). In the following description, the value in first character code register 3402 may be expressed by "k". In step S3501, content data analyzing unit 1301 handles the character reference format as one character similarly to step S1601.

Controller 3401 reads a "k"th value in disabled region table 3406, and determines whether the read value indicates the enabled region or not (step S3502). When it indicates the enabled region, the process proceeds to step S3403. When it does not indicate the enabled region, and thus indicates the disabled region, the process proceeds to step S3511.

Controller 3401 initializes character set number register 3403 to 0 (step S3503). In the following description, the value of character set number register 3403 is represented by "i". Controller 3401 initializes character number register 3404 to 0 (step S3504). In the following description, the value of character number register 3404 is represented by "j".

Controller 3401 reads the character code of "j"th character of the "i"th character set in character set information memory 410 from character set content information memory 409, and stores it in second character code register 3405 (step S3505).

Controller 3401 determines whether the values of first and second character code registers 3403 and 3405 match with each other or not (step S3506), and the process proceeds to step S3512 when these match with each other. Otherwise, controller 3401 increments the value of character number register 3404 by one (step S3507).

Controller 3401 determines whether the value of character number register 3404 matches with the number of characters included in the character set or not (step S3508). When matching occurs, the value of character set number register 3403 is incremented by one (step S3509). Otherwise, the process returns to step S3505.

Controller 3401 determines whether the value of character number register 3404 matches with the number of character sets described in character set information memory 410 (step S3510). When matching occurs, it returns the end code of "1" to the original processing, and the processing in Fig. 17 ends (step S3511). Otherwise, the process returns to step S3504.

When the process proceeds to step S3 511, this indicates that the content text data includes a character which is not included in one of the character sets indicated in character set information memory 410, or is not present in the enabled region.

In step S3512, controller 3401 inquires content data analyzing unit 1301 whether the current character is the last character in the content text data or not. When it is the last character, the process proceeds to step S3513. Otherwise, the process returns to step S3501.

When the process proceeds to step S3513, the end code of "0" is returned to the original processing. This indicates that all the characters included in the text data belong to the enabled region, and further are included in one or more character sets in character set information memory 410.

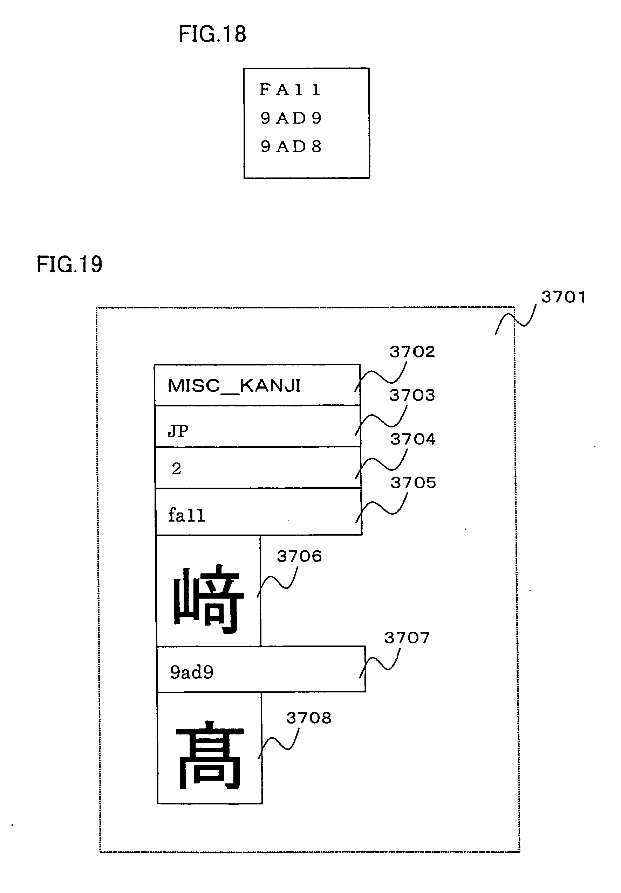

The structure described above compares each character set with the content text data independently of the other character sets, and therefore can archive an advantage that no problem occurs even when overlap of contents occurs between the character sets. In the sample content, it is assumed that no overlap particularly occurs in connection with the four character sets. However, when the character set, e.g., of "MISC_KANJI" corresponds to the character set content information illustrated in Fig. 18, the overlap occurs between "MISC_KANJI" and "JIS X 0208" in connection with Unicode "0x9AD8" (character in Fig. 5C). If content producing device 301 were configured to inhibit such overlap, the content producer could produce the content only when the content producer correctly recognized the characters included in each character set.

When the content producer intends to define the set of characters from a viewpoint different from that of already-exiting character sets and, for example, intends to define the character set by collecting only kanjis having specific radicals, it is not important for the content producer whether the already-existing character sets include the intended characters or not. In view of this, the structure of content producing device 301 allowing the overlap between the character sets have high practical value.

In this example, the respective character sets are read in the order described in the character set information memory 410, e.g., in step S3504. By employing a configuration that small values of "i" correspond to the standard character set, it is possible to increase the probability that the values of the first and second character code registers 3402 and 3405 match with each other before the processing in step S3506 is executed many times, and thus faster processing can be archived. The reason for this can be considered as follows. When the standard character set is appropriately set, such setting increases the probability that the character included in the standard character set is used in the content text data.

According to the procedure in Fig. 17, it is determined in step S3502 whether the character read from the content text data belongs to the enabled region or not. However, the procedure is not restricted to this. For example, after confirming that each character in each character set belongs to the enabled region, it may be determined whether each character in the content text data is included in one of the character sets or not, and this can archive the same result as the procedure in Fig. 17. The probability increases when the number of characters forming the character set is much smaller than the number of characters included in the content text data.

The processing performed in steps S3504 - 3508 for determining whether the character belongs to the character set or not may be performed using a table accessible with character codes, similarly to step S3502. In this case, a table having the same data structure as disabled region table 3406 may be prepared in addition to disabled region table 3406. However, the same table can be shared in the following manner, and thereby the capacity of the memory storing it can be small. In the table, an element corresponding to each character code "k" stores the character set number to which the character expressed by character code "k" belongs. Since "-1" is stored as the element corresponding to the disabled character, this can be distinguished from the character set number. Further, a value, which can be distinguished from both the character set number and "-1" can be stored as the element corresponding to the character in the content data not belonging to any character set. As the element corresponding to the character belonging to multiple character sets, a number of one of the multiple character sets may be stored, whereby no problem occurs when determining that the character belongs to one of the character sets.

A portion of the table other than the disabled characters may be initialized with reference to character set content information memory 409 and character set information memory 410. When the target character set is already determined, information prepared in advance may be stored in these memories.

Archiver 1304 archives one or more files included in the content data into one file, and saves the archived file in external storage device 406 (step S1406). More specifically, archiver 1304 produces one file by archiving and converting the text XML file, image file indicated by "filename" attribute of <image> tag, audio file indicated by "filename" attribute of <sound> tag, glyph data file prepared in advance and BOOK.DTD. These files can be handled as one file after the archiving, and each can be handled as the independent original file by unarchiving it.

The glyph data is data indicating the glyph corresponding to the character set used in the content data. In the sample content, it is assumed that the file storing the glyph data corresponding to "MISC_KANJI" is archived.

Fig. 19 illustrates an example of the data structure of the glyph data archived in step S1406. Glyph data 3701 includes a character set name field 3702, locale identification information field 3703, character number field 3704, character code field 3705, glyph 3706, character code field 3707 and glyph 3708. Character set name field 3702 stores a character set name in the form of a character string. Locale identification information field 3703 stores locale identification information in the form of a character string. Character number field 3704 stores the number of glyphs included in glyph data 3701. Character code fields 3705 and 3707 store character codes of the character set. Glyphs 3706 and 3708 are type face data themselves. Fig. 19 schematically illustrates the glyph data. The glyph data is actually stored by an appropriate known technique for image data, vector data or the like. It is assumed that glyph data distributing device 309 described below transmits the glyph data in the same format as that in Fig. 19.

As will be apparent from the description of content display device 305, it is advantageous that a character set of low generality (i.e., less versatile character set) is archived in the content data in step S1406, and thus the glyph data is incorporated into the content data itself. Conversely, a character set of high generality, i.e., a character set having a high probability of existence in content display devices 305 - 308 and 405, or glyph data distributing device 309 is not particularly required to incorporate the glyph data into the content. The above archive processing is premised on that the content producer cannot not generally recognize the character sets available in content display devices 305 - 308.

When the content data includes all the glyph data, which is used in the content data and includes the glyph data corresponding to the standard character set, it is possible to produce the content data which can be always displayed without depending on the glyph data available in content display devices 305 - 308 and 405. However, the content data including all the glyph data increases in size.

If the content data includes no glyph data, the possibility of display by content display devices 305 - 308 entirely depends on the glyph data that is currently available, but the size of the content data can be kept small, which is advantageous in cost of distribution.

In this example, the files included in the content data are archived as they are. However, the archiving may be performed after converting each file into data in a different format suitable for processing by content display device 305 described later. In this case, it is naturally necessary to configure content display device 305 to analyze the data in the different format. For example, conversion may be performed to provide data using encoding different from that of the description content data. In the sample content in Fig. 5, "UTF-8" is used as designated in line 1, and this is replaced, e.g., with "shift JIS". In the above processing, a range of the characters to be subjected to the encoding conversion may be limited in advance, and the characters outside the range may be expressed in the foregoing character reference format. In the case of conversion, e.g., to "shift JIS", the characters not included in "JIS X 2101" and "JIS X 2108" are expressed in the character reference format in which corresponding Unicode, is expressed by character strings.

As described above, when the content data is converted into data using encoding different from the encoding of the content data, the target characters to be converted are limited only to the character set, which can be described according to the above different encoding, or a subset thereof, and the other characters are expressed in the character reference format or a format substantially equivalent to it. Thereby, it is possible to express even the characters which cannot be described according-to-the different encoding.

Then, data encoding unit 1305 encodes the file produced in step S1406, writes the encoded file into external storage device 406 (step S1407) and then ends the processing in Fig. 14. In this example, data encoding unit 1305 compresses the file in LZ77 method. The encoding method of data encoding unit 1305 is not restricted to this. For example, other compression methods can naturally be employed, and encryption may be performed for preventing such situations that a person other than an authorized user reads or tampers contents or data during distribution of the content. The essentials are to allow decoding by content display devices 305 - 308 described later. If the encoding is not necessary, the file may be output without any encoding.

In step S1408, error message output unit 1306 provides an error message to display unit 402 based on the information received from content data analyzing unit 1301, and the processing in Fig. 14 ends. In step S1409, error message output unit 1306 provides an error message to display unit 402 based on information received from character code inspecting unit 1302, and the processing in Fig. 14 ends.

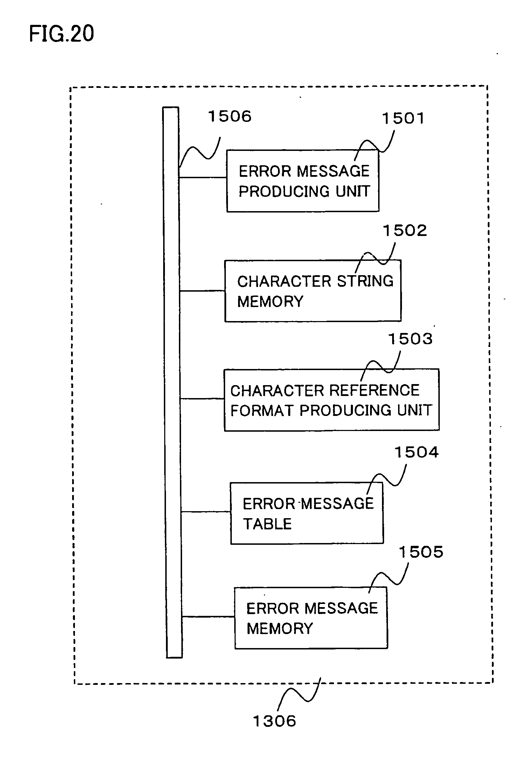

Referring to Fig. 20, error message output unit 1306 has an error message producing unit 1501, a character string memory 1502, a character reference format producing unit 1503, an error message table 1504, an error message memory 1505 and a data bus 1506 mutually connecting these units and portions for communication.

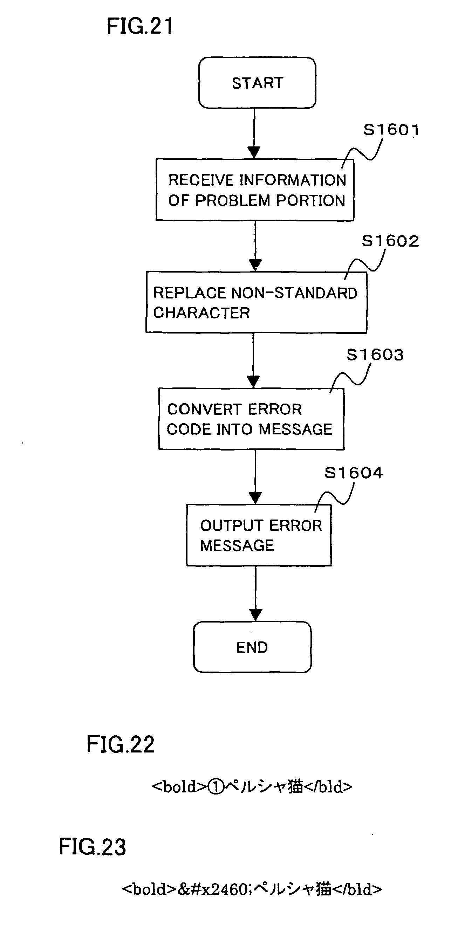

According to a flowchart in Fig. 21, description will now be given on processing of error message output unit 1306 in step S1408. First, error message producing unit 1501 receives a character string of a portion, in which a problem is detected, of the content data from content data analyzing unit 1301, and stores it in character string memory 1502 (step S1601). Content data analyzing unit 1301 handles the character reference format as one character. In the example of Fig. 5A, half-width "&#xfall;" is handled as one character.

Fig. 22 illustrates an example of a partial character string of the content data corresponding to a position of a problem that correspondence is not established between the start and end tags. Character string memory 1502 stores such kinds of character strings.

Among the character strings stored in character string memory 1502, character reference format producing unit 1503 replaces characters (to be referred to as "nonstandard characters" hereinafter), which are not included in character set "JIS X 2101" or "JIS X 2108", and thus are included in a complementary set of character set "JIS X 2101" or "JIS X 2108", with codes in the character reference format formed of characters included in another character set (step S1602). The character sets displayable by content producing device 301 include character sets "JIS X 2101" and "JIS X 2108", but also includes characters not included in character sets "JIS X 2101 and "JIS X 2108. Therefore, it should be noted that even a character included in the character set "JIS X 2101" or "JIS X 2108" displayable by content producing device 301 may be replaced with a code in the character reference format in step S1602. In step S1602, the contents of character string memory 1502 illustrated in Fig. 22 are replaced as illustrated in Fig. 23.

Error message producing unit 1501 receives an error code identifying the cause of the problem from content data analyzing unit 1301, converts it into an error message with reference to error message table 1504 and stores it in error message memory 1505 (step S1603).

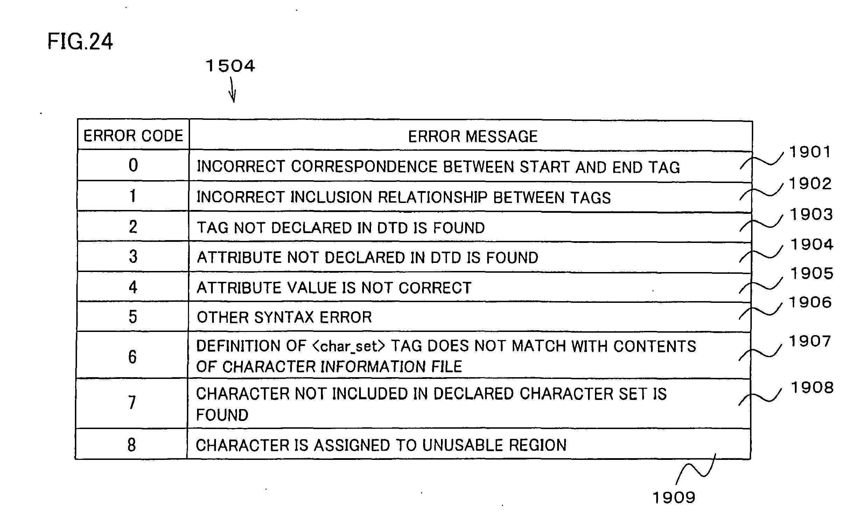

Error message table 1504 in Fig. 24 stores error messages 1901, 1902, ... 1909 corresponding to error codes 0, 1, ... 8, respectively.

In an example of error message table 1504 illustrated in Fig. 24, the example illustrated in Fig. 23 corresponds to the error code "0". Therefore, an error message 1901 corresponding to an error code "0" is read from error message table 1504, and is stored in error message memory 1505.

In this example, content data analyzing unit 1301 provides an error code taking a value of an integer from 0 to 6. Error codes "7" and "8" respectively corresponding to error messages 1908 and 1909 in error message table 1504 are provided from character code inspecting unit 1302.as will be described later.

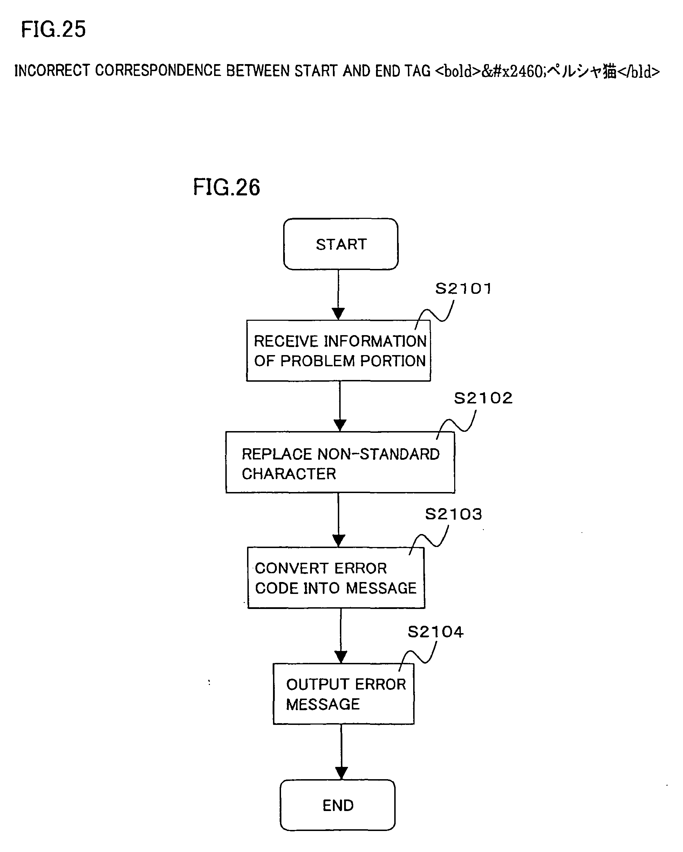

Then, error message producing unit 1501 couples a character string stored in error message memory 1505 and a character string stored in character string memory 1502 together to provide an error message to display unit 402 (step S1604). For example, the example illustrated in Fig. 23 results in an error message illustrated in Fig. 25.

Fig. 26 is a flowchart of the processing in step S1409 of error message output unit 1306. A majority of processing is the same as that in step S1408 of error message output unit 1306, and therefore only a difference will be described.

Error message producing unit 1501 receives a partial character string of the content data in a position of a detected problem from character code inspecting unit 1302, and stores it in character string memory 1502 (step S2101). Processing in next step S2102 is the same as that in step S1602.

Then, error message producing unit 1501 receives an error code identifying a cause of the problem from character code inspecting unit 1302, searches for error message table 1504 based on the received error code, reads the error message corresponding to the error code and stores the read error message in error message memory 1505 (step S2103). It is assumed that error message producing unit 1501 receives the error code "7" or "8" from character code inspecting unit 1302. The processing in next step S2104 is the same as that in step S1604.

Description will now be given on the significance of replacing the nonstandard character included in the error message with the character reference format in step S1602 or S2102. By incorporating a part of the content data into the error message and displaying it, it is possible to exhibit a cause of the error intelligibly to the content data producer. However, if there is no limitation on the character code included in the content data, the character displayable by one of the content producing devices cannot necessarily be displayed by the other content producing device when the error message is saved as a file, and is transferred to the other content producing device, and therefore the contents of the message may not be displayed correctly. For preventing this situation, it is effective that the characters described in the character reference format are limited to the standard characters.

For displaying the error message by the other content producing device, conversion between different kinds of encoding may be required, but one or some character set(s) may now allow such character code conversion. For example, there are many characters which are defined by "Unicode", but do not correspond to any "shift JIS code". For converting the error message in Unicode including such characters into the "shift JIS code" message for outputting it, it is necessary to limit directly the characters for description in the message.

For the content description in this embodiment, the characters not included in the character set displayable by content producing device 301 are described in the character reference format. This configuration prevents a situation that the content text data includes the characters which cannot be displayed. If content producing device 301 does not employ the above configuration, the limitation of the character appearing in the error message to the displayable character set or its subset means prevention of the character, which cannot be displayed by content producing device 301 itself, from being included in the error message, and thus is more important.

In this embodiment, the characters directly described in the message are in the range of the standard characters. However, even when the range of the characters for direct description is changed, the intended function can be achieved provided that the characters for direct description are in the range of characters displayable by content producing device 301.

Content distributing device 303 is employed for converting the distribution content data produced by content producing device 301 or 302 into the display content data for display, and for distributing it to the user of content display devices 305 - 308. Content distributing device 304 has the substantially same structure and function as content distributing device 303.

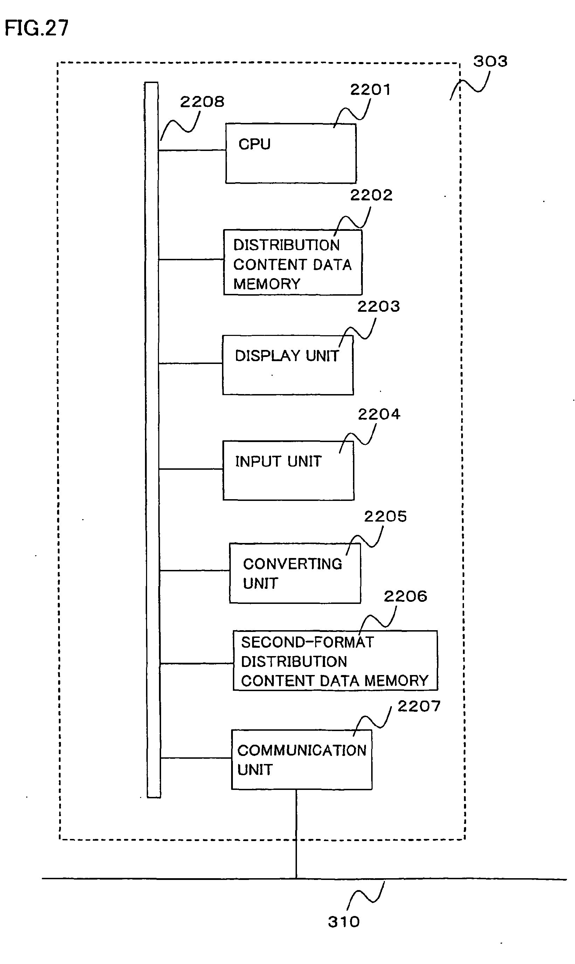

Referring to Fig. 27, content distributing device 303 includes a CPU 2201, a distribution content data memory 2202, a display unit 2203, a user-operable input unit 2204 such as a keyboard, a converting unit 2205, a second-format distribution content data memory 2206 and a communication unit 2207 controlled by CPU 2201 as well as a data bus 2208 mutually connecting these units and portions for communication. Communication line 310 is also connected to communication unit 2207. Distribution content data memory 2202 stores a plurality of items of distribution content data which are produced by content producing device 301 or 302, and then are transmitted via communication line 310.

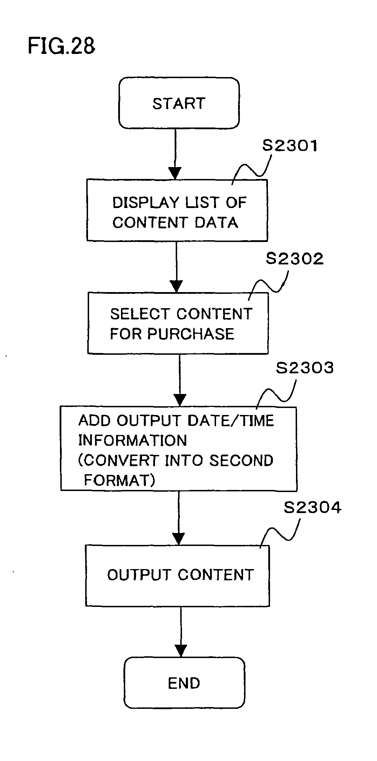

According to a flowchart of Fig. 28, an operation of content distributing device 303 will now be described. First, CPU 2201 displays a list of the distribution content data stored in distribution content data memory 2202 by display unit 2203 (step S2301). The user refers to the displayed list, and operates input unit 2204 to enter an instruction for selecting the content which the user wishes to purchase (step S2302).

Then, converting unit 2205 reads the selected distribution content data from distribution content data memory 2202, converts it into second-format distribution content data, and stores the second-format distribution content data obtained by the conversion in a second-format distribution content data memory 2206 (step S2303). Then, CPU 2201 reads the second-format distribution content data stored in second-format distribution content data memory 2206, and displays (outputs) it on display unit 2203 (step S2304).

The conversion processing performed in step S2303 depends on a relationship determined between the distribution content data and the second-format content data in the content display system. The conversion processing means the processing of converting the distribution content data into the second-format distribution content data by adding data of date and time of output from content distributing device 303 to the distribution content data.

Various relationships may be present between the distribution content data and the second-format distribution content data. For example, if details of the distribution content data are completely the same as those of the second-format distribution content data, converting unit 2205 performs a mere copy operation in step S2303. The second-format distribution content data may be produced by encrypting the distribution content data to provide a function of allowing decryption only by the user, who operated content distributing device 303, or the owner of content display devices 305 - 308.

When content distributing device 303 is practically used for commercial purposes, it performs billing or charging processing. However, such processing does not form an essential part of the invention, and therefore is not described.

Content display device 305 receives the distribution content data provided or transmitted from content producing device 301 or 302, or the second-format distribution content data provided (transmitted) from content distributing device 303 or 304 via communication line 310, and displays the received data. In the following description, "distribution content data" means both the distribution content data provided from content producing device 301 or 302 and the second-format distribution content data provided from content distributing device 303 or 304.

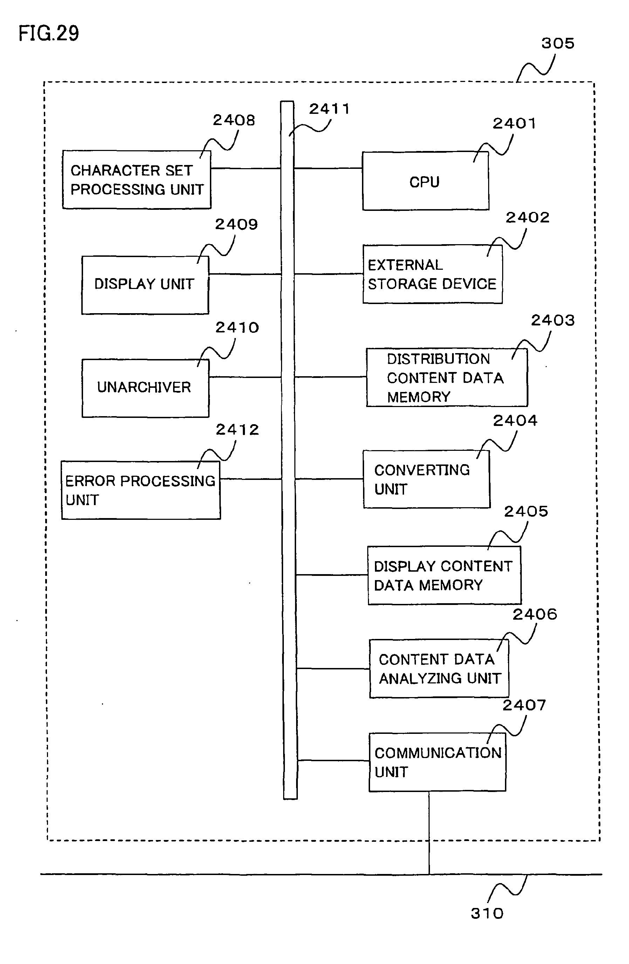

Fig 29 is a block diagram of content display device 305. Content display devices 306 - 308 have the same structures as content display device 305.

Referring to Fig. 29, content display device 305 has a CPU 2401, an external storage device 2402, a distribution content data memory 2403, a converting unit 2404, a display content data memory 2405, a content data analyzing unit 2406, a communication unit 2407, a character set processing unit 2408, a display unit 2409, an unarchiver 2410 and an error processing unit 2412 controlled by CPU 2401 as well as a data bus 2411 mutually connecting these units and parts for communication. Communication unit 2407 is also connected to communication line 310. It is assumed that external storage device 2402 stores one or more items of distribution content data supplied (received) from content producing device 301 or content distributing device 303 via communication line 310 and communication unit 2407.

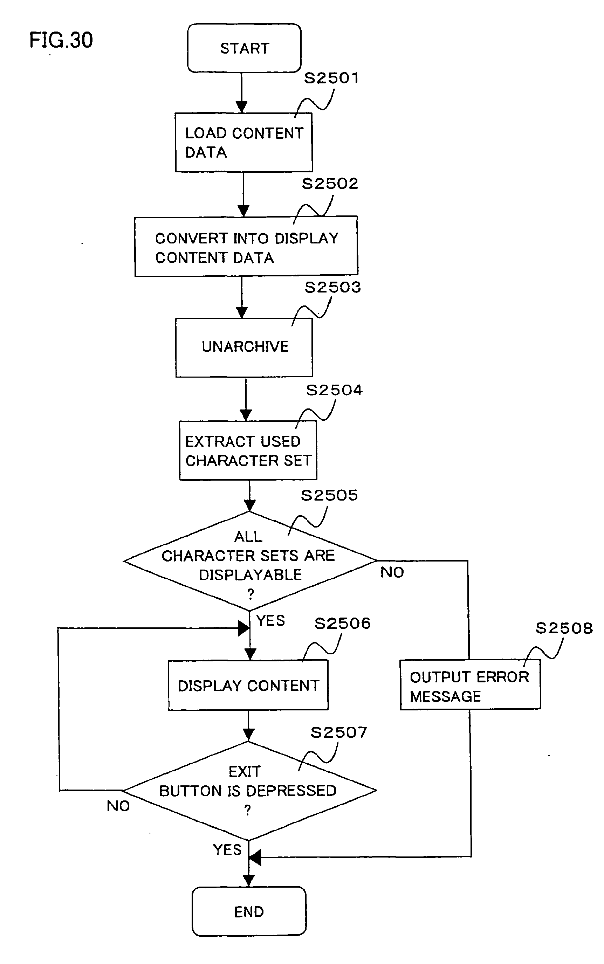

According to a flowchart of Fig. 30, description will now be given on an operation of content display device 305 during content reproduction. First, CPU 2401 loads the distribution content data stored in external storage device 2402 into distribution content data memory 2403 (step S2501). For the sake of simplicity, it is assumed that external storage device 2402 has stored only one item of the distribution content data. Naturally, distribution content data memory 2403 may store a plurality of items of the distribution content data so that the user can select desired distribution content data.

Then, converting unit 2404 converts the distribution content data stored in distribution content data memory 2403 into display content data, and stores the display content data obtained by the conversion in display content data memory 2405 (step S2502).

When the distribution content data to be converted is the second-format distribution content data, the conversion processing performed in converting unit 2404 corresponds to conversion reverse to conversion archived by combination of the processing in data encoding unit 1305 of content producing device 301 and the conversion processing by converting unit 2205 in content display device 305. In other cases, the above conversion processing performed in converting unit 2404 corresponds conversion processing reverse to the conversion processing for the encoding in data encoding unit 1305 of content producing device 301.

Then, unarchiver 2410 unarchives the display content data in the form of the single file into the individual files (step S2503). This corresponds to the processing according to a procedure reverse to that of the processing in step S1406 of contend producing device 301.

Then, content data analyzing unit 2406 extracts the value of the "name" attribute and the value of the "locale" attribute of the <char_set> tag in the content text data, and transmits the extracted information to character set processing unit 2408 (step S2504).

Character set processing unit 2408 determines whether the character set expressed by the information obtained in step S2504 is displayable by content display device 305 or not (step S2505). If displayable, the process proceeds to step S2506. Otherwise, the process returns to step S2508. More specifically, CPU 2401 determines that the character set is displayable when character set processing unit 2408 returns "0" as the end code, and determines that the character set is not displayable when it returns "1" as the end code. An operation of character set processing unit 2408 in step S2505 will be described later.

In step S2506, content data analyzing unit 2406 analyzes the display content data stored in display content data memory 2405, and displays the display content data through display unit 2409 based on the result of this analysis (step S2506). The "display" have the meaning wider than the visual display of the text or image depending on the type of data, and can include meaning, e.g., of reproduction of sound or voice when audio data is described with the <sound> tag. An example of such display is illustrated in Fig. 12. In this example, the content data described in XML is analyzed by a predetermined procedure, and rendering thereof is performed on a screen based on a result of the analysis although a specific data structure and a rendering method are not restricted in the invention.

CPU 2401 determines whether EXIT button 1203 (see Fig. 12) is depressed or not (step S2507). When depressed, processing of displaying the content data ends. Otherwise, the process returns to step S2506.

When the process proceeds to step S2508, the content display processing in step S2506 is skipped, and error processing unit 2412 displays on display unit 2409 the message to the effect that the content cannot be displayed, based on the error message applied from character set processing unit 2408. Thereafter, a series of processing ends.

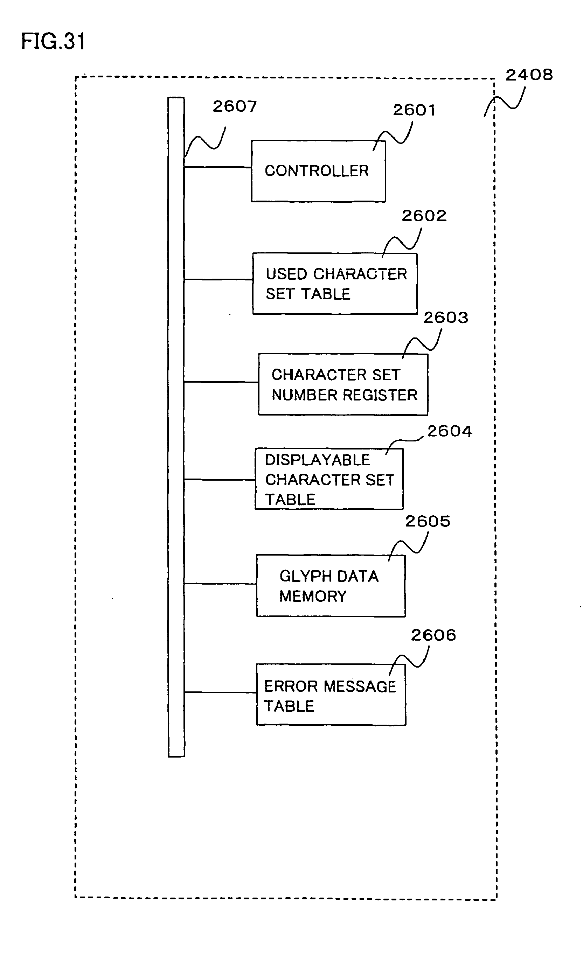

Referring to Fig. 31, character set processing unit 2408 has a controller 2601, a used character set table 2602, a character set number register 2603, a displayable characters set table 2604, a glyph data memory 2605 and an error message table 2606 controlled by controller 2601 as well as a data bus 2607 mutually connecting these portions. It is assumed that displayable character set table 2604 and glyph data memory 2605 are stored in a nonvolatile memory (not shown).

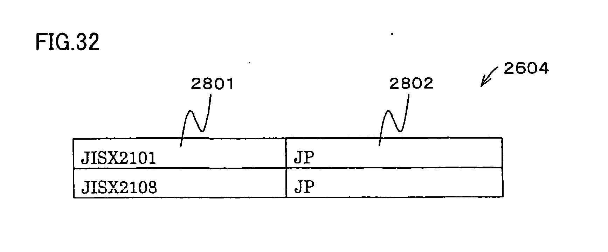

Displayable character set table 2604 stores data of glyph corresponding to glyph data memory 2605. Thus, displayable character set table 2604 stores information of the character sets, which can be displayed by content display device 305 without addition of data, in the format illustrated, e.g., in Fig. 32. Displayable character set table 2604 in Fig. 32 stores names of the character sets in a first column 2801, and stores corresponding locale identification information in a second column 2802. In the example in Fig. 32, it is represented that content display device 305 can display the two character sets "JIS X 2101" and "JIS X 2108" without additional information. Naturally, glyph data memory 2605 in this example has stored the glyph data of the two character sets.

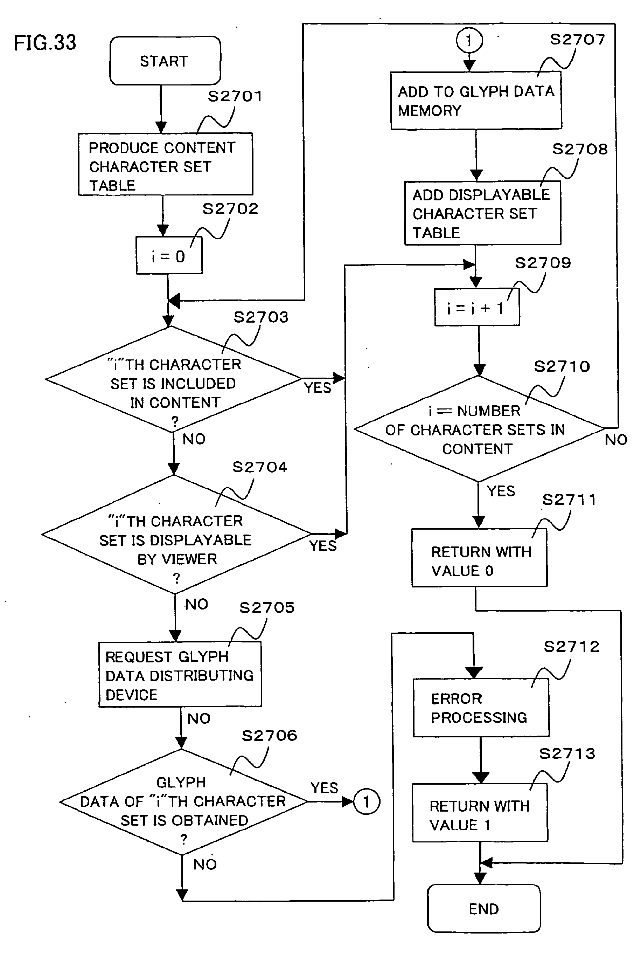

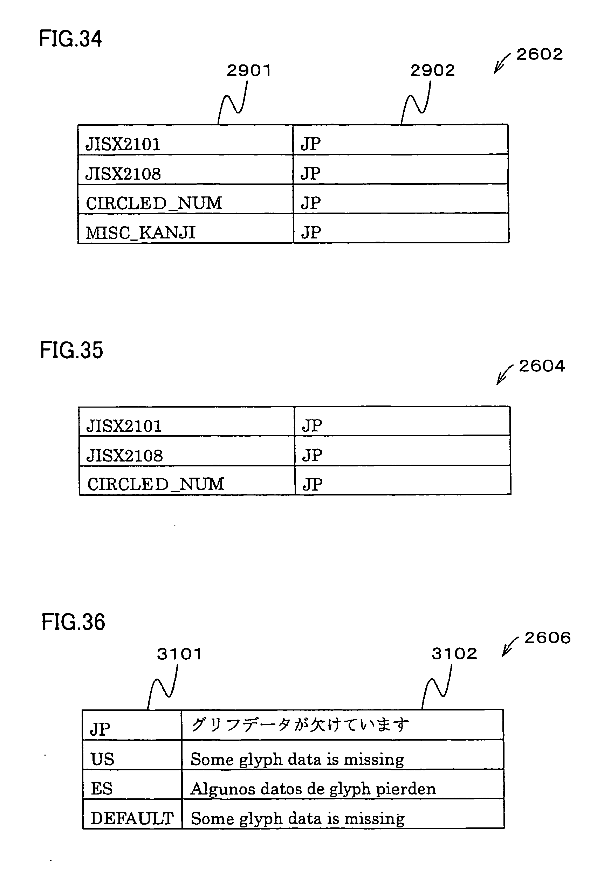

According to a flowchart of Fig. 33, an operation in step S2505 of character set processing unit 2408 will now be described. First, controller 2601 stores the information, which is transferred from content data analyzing unit 2406 in step S2504, in used character set table 2602 (step S2701). Used character set table 2602 has the same structure as displayable character set table 2604. Fig. 34 illustrates an example of the data stored in used character set table 2602 corresponding to the sample content. A first column 2901 represents character set names, and a second column 2902 represents locale identification information corresponding to the character sets of the character set names.

Then, controller 2601 initializes character set number register 2603 with "0" (step S2702). In the following description, the value of character set number register 2603 is expressed by a control variable "i". First data in used character set table 2602 is indicated by "i=0".

Then, controller 2601 determines whether the display content data includes the glyph data of the "i"th character set in used character set table 2602 or not (step S2703). When included, the process proceeds to step S2709. Otherwise, the process proceeds to step S2704. In the processing of the sample content, the display content data includes "MISC_KANJI" which is the fourth character set in used character set table 2602 so that the process proceeds to step S2709 when i is three. Otherwise, the process proceeds to step S2704.

In step S2704, controller 2601 determines whether displayable character set table 2604 includes "i"th character set in used character set table 2602 or not. When it includes, the process proceeds to step S2709. Otherwise, the process proceeds to step S2705. In the processing of the sample content, since displayable character set table 2604 includes 0th and 1st character sets "JIS X 2101" and "JIS X 2108" in used character set table 2602, the process proceeds to step S2709 when the "i" is 0 or 1, and otherwise the process proceeds to step S2705.

In step S2705, controller 2601 requests, via communication unit 2407 and communication line 310, glyph data distributing device 309 to transmit the glyph data corresponding to the "i"th character set in used character set table 2602. Glyph data distributing device 309 is a server computer storing the multiple kinds of glyph data. When glyph data distributing device 309 receiving the request has stored the requested glyph data, the requested glyph data is read and transmitted to the requester. When the requested data is not stored, the data notifying of it is transmitted to the requester. Glyph data distributing device 309 is archived by a known technology, and thus details thereof will not be described.

Returning to the description of content display device 305, controller 2601 determines according to the data received from glyph data distributing device 309 whether the requested glyph data is obtained or not (step S2706). When obtained, the process proceeds to step S2707, and otherwise the process proceeds to step S2712.

In step S2707, controller 2601 adds and writes the received glyph data into glyph data memory 2605. Then, controller 2601 writes the character set name and the locale identification information of the "i"th character set in used character set table 2602 into displayable character set table 2604 (step S2708). Then, controller 2601 increments the value of character set number register 2603 (step S2709). Then, controller 2601 determines whether the value of character set number register 2603 matches with the number of the character sets included in used character set table 2602 or not (step S2710). When it matches, the process proceeds to step S2711. Otherwise, the process returns to step S2703.

In step S2711, controller 2601 returns "0" as the end code to the original processing. This means that all the character sets described in used character set table 2602 are displayable. When processing the sample content, it is assumed that the glyph data corresponding to character set "CIRCLED_NUM" is obtained from glyph data distributing device 309. In this case, displayable character set table 2604 in step S2711 has contents illustrated in Fig. 35. This differs from the table illustrated in Fig. 32 in that the information corresponding to "CIRCLED_NUM" is added by the processing in step S2708. "MISC_KANJI" is included in the sample content. Thereby, all the character sets included in the sample content can be displayed.

In step S2712, controller 2601 issues an error message. Error message table 2606 stores different error messages corresponding to multiple items of the locale identification information, respectively. Fig. 36 illustrates an example. The character strings indicating the locale identification information are stored in a first column 3101, and corresponding error messages are stored in a second column 3102. "DEFAULT" in the locale identification information corresponds to the default error message.

In step S2712, since the "i"th character set of displayable character set table 2604 is not displayable, controller 2601 reads the error message matching with the corresponding locale identification information from error message table 2606, and provides it to error processing unit 2412.

For example, when the locale identification information corresponding to the "i"th character set is "US" (U.S.A.), a message "Some glyph data is missing" in English is issued. When it is "ES" (Spain), a message in Spanish is likewise issued.

When there is no corresponding locale identification information in error message table 2606, the error message corresponding to "DEFAULT" is issued. The locale identification information of "DEFAULT" is prepared in error message table 2606 because the locale identification information of "DEFAULT" can reduce the number of steps, the memory capacity, the cost and others required for preparing the error messages corresponding to all the locale identification information.

As described above, content display device 305 issues the message with reference to the locale identification information of the content data, and this configuration can provide an advantage that the message aimed at the possible main user of the content can be issued. For example, when a user needs the content display in Spanish, this user is probably accustomed to Spanish, but it is not clear whether the user can understand Japanese and/or English. In view of this, the message is displayed based on the locale identification information included in the content.

The above description has been primarily given on the messages which are issued when errors occur. However, messages for ordinary operations other than the above can likewise be displayed with reference to the locale identification information of the content, and this can naturally archive similar effectiveness.

Then, controller 2601 returns "1" as the end code to the original processing (step S2713), and a series of processing ends.

For the contents of the messages, variations may be employed. For example, a name of the undisplayble character set may be displayed, or a message corresponding to the locale identification information of "DEFAULT" may always be issued in parallel with the display of the message corresponding to the locale identification information.

If content display device 305 does not have glyph data enough to display the error message in prepared error message table 2606, a message corresponding to the locale identification information of "DEFAULT" may be issued. This and other variations may likewise be employed.

In this embodiment, character set processing unit 2408 checks whether the glyph data of the character set in question is included in the display content data or not. If it is not included, character set processing unit 2408 checks whether content display device 305 can display it or not. For the content data, which is determined to be not displayable, character set processing unit 2408 accesses the glyph data of glyph data distributing device 309. However, it is appropriate to change this procedure, e.g., as follows depending on purposes. For example, the glyph data may be renewed frequently, and the renewed glyph data probably and generally may have more appropriate details. In this case, only when the access is made to glyph data distributing device 309 but the corresponding glyph data cannot be received, it is checked whether the character set is currently displayable by content display device 305 or not, and finally it is checked whether the content includes the character set or not. Naturally, this kind of variation may be employed.

In this embodiment, when one or some of the character sets included in the distribution content data in character set processing unit 2408 are not displayable, content display device 305 stops the display of the distribution content data. However, the device may be configured to continue the display of the distribution content data. For continuing the display, characters belonging to the undisplayable character set can be managed such that characters such as "=" or spaces to be used as substitution of the original fonts are displayed.

### <Second Embodiment>

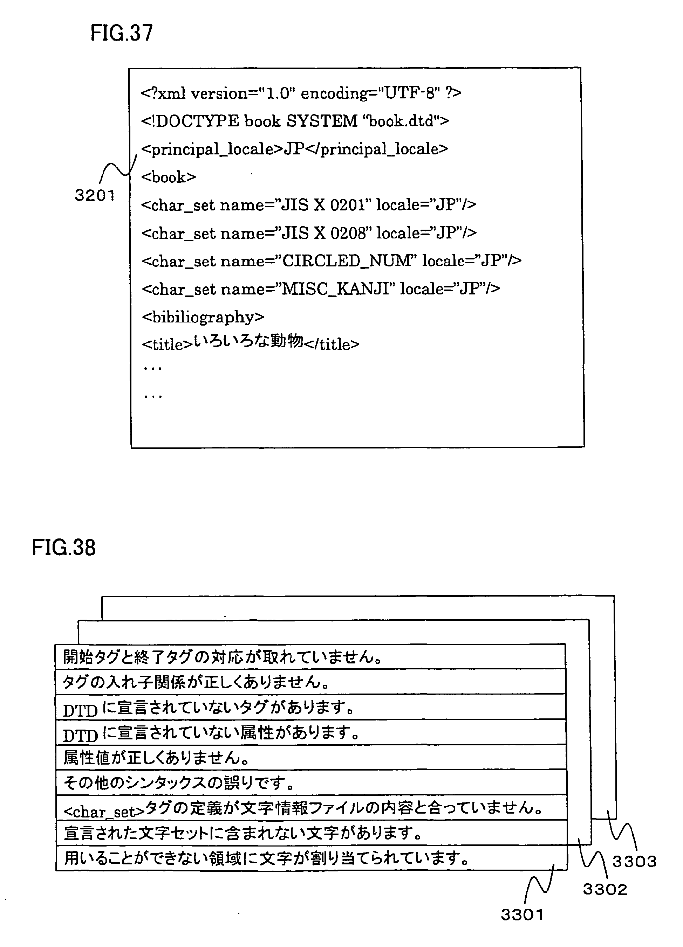

According to a second embodiment, the content data includes a region storing the locale identification information for determining the language, which is used of outputting the message, independently of the character set information. Fig. 37 illustrates an example of description of such content data. In Fig. 37, a <principal_locale> tag 3201 is a new tag which is not present in the sample content in Fig. 5A. An operation of the second embodiment differs from that of the first embodiment as follows.

In step S2712 of the first embodiment, controller 2601 reads the child element character string of <principal_locale> tag 3201 as the locale identification information instead of the locale identification information corresponding to the "i"th character set in displayable character set table 2604, reads the corresponding error message from error message table 2606, and provides it to display unit 2409. Naturally, for making <principal_locale> tag 3201 usable, it is necessary to change document definition file BOOK.DTD. and content data analyzing units 1301 and 2406.

Although the locale identification information is added in the XML format, this is for the description of the example of handling the content data in the XML format, and this is not restrictive.

In connection with the effect of the locale identification information, the following can be additionally stated. According to Unicode, characters, which are assigned the same character code but have different glyphs depending on the region of use, respectively, are handled as different characters if the locale identification information of the character set including the character is different from that of the other(s), and therefore no confusion occurs. For example, the glyph data of the character sets are produced as follows. In the glyph data of the character set combined with the locale identification information of "JP", a glyph illustrated in Fig. 40 corresponds to Unicode "0x76F4". In the glyph data of the character set combined with the locale identification information of "CN" indicating China, a glyph illustrated in Fig. 41 corresponds to Unicode "0x76F4". Thereby, confusion due to the same character code does not occur. This manner is not restricted to the Unicode, and is also effective when the character sets are defined and used in the character code system in which the same code is assigned to different glyphs.

### <Third Embodiment>

A third embodiment employs a procedure employed in the second embodiment for determining the message to be issued from content display device 305 according to the locale identification information included in the content data, and applies this procedure to content producing device 301.

The third embodiment differs from the second embodiment in that error message producing unit 1501 producing the error message in step S1604 changes or switches error message table 1504 according to the locale identification information indicated by the child element character string of <principal_locale> tag 3201. Referring to Fig. 38, description will now be given on a concept of the error message table in the third embodiment. Tables 3302 and 3303 of error messages written in languages corresponding to locale identification information other than that of "JP" are prepared in addition to a table 3301 of error messages in Japanese corresponding to locale identification information "JP". Error message producing unit 1501 switches the error message table to be employed according to the locale identification information. Even in this case, it is preferable to prepare the default error message table in view of the cases where the locale identification information cannot be obtained, or unexpected locale identification information is obtained.

According to each embodiment already described, content producing device 301 allows the content producer to define the character set according to the need, and further ensures that the distribution content data has the intended character code. Therefore, the user can produce the content data more freely.

Further, each embodiment is configured to allow definition of the locale identification information simultaneously with the character set name. Therefore, the glyphs of multiple languages (regional languages) can be discriminated from each other according to the locale identification information provided together with the character codes even in the character code system such as "Unicode" in which the same character code is assigned to different glyphs depending on the country or region. Therefore, such a situation can be avoided that the character is displayed with a glyph different from the glyph intended by the user.

In each embodiment, the system can dynamically change the language of the displayed message depending on the content data handled thereby. Therefore, the message is displayed to the user in the language suitable for the user, and the user can utilize the content display system more comfortably.

According to each embodiment, the content producer can define the character sets each having the character overlapping with that in another character set. Therefore, the content producer can freely define and use the character sets depending on the purpose for producing the content.

Each embodiment uses the character reference format or a format substantially equivalent to it, and thereby can restrict the characters included in the message provided from content producing device 301 or the characters appearing in details of the content data. Therefore, the conversion of encoding of the message or the display of the messages by the plurality of content producing devices 301 can be performed more reliably.

In each embodiment, the table is accessed according to the character code, and it is determined based on this table whether each character in the content data is in the enabled region or not, i.e., whether it belongs to the character set or not. Therefore, the processing can be performed efficiently, and the conditions of determination relating to the enabled state can be easily varied.

In each embodiment, the table is used for determining whether each character in the content data is in the enabled region or not, i.e., whether it belongs to the character set or not, and this table is configured to serve also as the table for determining the character set to which each character belongs. Therefore, the required memory capacity can be reduced.

In each embodiment, both the character displayable by content display device 305 and the character not displayable thereby can be described in the character reference format or a format substantially equivalent to it. Therefore, the content producer can continue the description of the content data even if the content producer does not know the character set, to which a certain character belongs, when the content producer produces the content data.

In each embodiment, when the description content data is to be converted into the distribution content data using another encoding, the encoding conversion of the characters is effected only on the characters belonging to the character set allowing description by another encoding or the subset thereof, and the other characters are expressed in the character reference format or a format substantially equivalent to it. Thereby, it is possible to display even the characters that cannot be described by another encoding.

In each embodiment, since the character set produced according to an external operation can be designated for describing the content data, the content producer can produces the content data by externally operating and designating the desired character set.

For displaying the described content data, each character set used in the description can be displayed with reference to regional glyph data specified based on the corresponding identification data which is included in advance in the content data. Therefore, it is possible to avoid the display with the glyph different from the glyph intended in the content data.

Even when different regions are handled in the data processing, messages related to the data processing can be issued in the forms (languages) allowing recognition in the respective regions.

For the glyph data corresponding to the character set, which is not included in the device itself, the device has the function of externally obtaining such glyph data so that the content display device can display even the content data described in multiple kinds of languages and/or characters.

### <Fourth Embodiment>

The various units and portions of the content producing device, content distributing device and content display device already described perform the processing according to the flowcharts, and this processing is implemented by the program, In this embodiment, the program is stored on a computer-readable record medium.

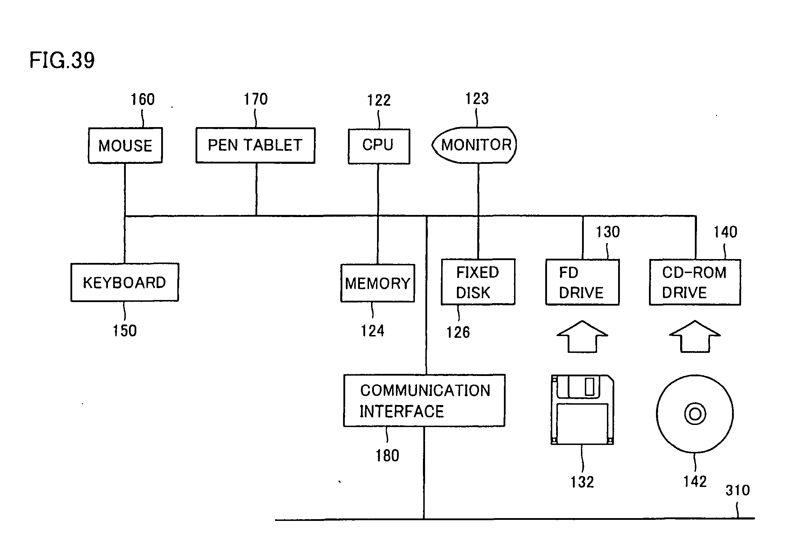

Fig. 39 illustrates a hardware structure of a computer according to a fourth embodiment, and this structure is applied to the structures of the content producing devices and content display devices according to the embodiments already described.

Referring to Fig. 39, the computer includes a monitor 123 formed of a CRT (Cathode-Ray Tube) or the like, a CPU 122 concentratedly controlling the computer itself, a memory 124 including a ROM (Read-Only Memory) or RAM (Random-Access Memory), a fixed disk 126, a FD (Flexible Disk) drive 130 accessing a flexible disk 132 removably loaded thereinto, a CD-ROM (Compact Disk Read-Only Memory) drive 140 accessing a CD-ROM 142 removably loaded thereinto, a keyboard 150, a mouse 160, a pen tablet 170 and a communication interface 180 connecting the computer to communication line 310 for communication.

In content producing device 301, CPU 401 corresponds to CPU 122, display unit 402 and content display device 405 correspond to monitor 110, external storage device 406 corresponds to flexible disk 132 or CD-ROM 142, communication unit 407 corresponds to communication interface 180, and converting unit 411 corresponds to a function of a program in memory 124 executed by CPU 122. Further, description content data memory 408, character set content information memory 409, distribution content data memory 412 and glyph data memory 413 correspond, e.g., to memory 124, fixed disk 126, flexible disk 132 and CD-ROM 142.

In content distributing device 303, CPU 2201 corresponds to CPU 122, display unit 2203 corresponds to monitor 110, communication unit 2207 corresponds to communication interface 180 and converting unit 2205 corresponds to a function of the program in memory 124 executed by CPU 122. Further, distribution content data memory 2202 and second-format distribution content data memory 2206 correspond, e.g., to memory 124, fixed disk 126, flexible disk 132 and CD-ROM 142. Input unit 2204 corresponds to keyboard 150 and others.

In content display device 305, CPU 2401 corresponds to CPU 122, display unit 2409 corresponds to monitor 110, external storage device 2402 corresponds to flexible disk 132 or CD-ROM 142, and communication unit 2407 corresponds to communication interface 180. Converting unit 2404, content data analyzing unit 2406, character set processing unit 2408, unarchiver 2410 and error processing unit 2412 correspond to a function of the program in memory 124 executed by CPU 122. Distribution content data memory 2403 and display content data memory 2405 correspond, e.g., to memory 124, fixed disk 126, flexible disk 132 and CD-ROM 142.

The computer in Fig. 39 may be provided with a magnetic tape deck or device accessing a cassette-type magnetic tape removably loaded thereinto.

The record medium described above may be a memory required for processing by the computer illustrated in Fig. 39. For example, memory 124 may be a program medium. The computer may be provided, as the foregoing external read device, with a program read device such as a magnetic tape deck (not shown) or CD-ROM drive 140, into which the record medium, i.e., the magnetic tape or CD-ROM 142 is inserted to provide the readable program medium. Any one of the above structures may be configured to execute the program stored in the record medium by CPU 122 accessing it. Alternatively, any of the above structures may employ a method in which a program is read from the record medium, and then is loaded into a predetermined program storage area such as a program storage area of memory 124, and subsequently CPU 122 reads and executes it. This program to be loaded is prestored in the computer.

The foregoing program medium has a structure which can be separated from the computer body, and can fixedly bear the program. For example, this program medium may be a tape such as a magnetic tape or a cassette tape, a disk such as a magnetic disk (e.g., a flexible disk and fixed disk 126) or an optical disk (e.g., CD-ROM 140, MO (Magnetic Optical disk), MD (Mini Disk) or DVD (Digital Versatile Disk)), a card such as an IC card (including a memory card) or an optical card, or a semiconductor memory such as a mask ROM, EPROM (Erasable and Programmable ROM), EEPROM (Electrically EPROM) or a flash ROM.

In this embodiment, since various communication networks including the Internet can be applied to communication line 310, the record medium may be configured to bear fluidly a program downloaded via the communication network. The record medium may store contents other than the program, and may store data.

Although the present invention has been described and illustrated in detail, it is clearly understood that the same is by way of illustration and example only and is not to be taken by way of limitation, the spirit and scope of the present invention being limited only by the terms of the appended claims.

Support for the claims and further embodiments are defined in the following itemized list:
1. A content producing device (301) comprising:
   character set designating means (410) for designating one or more character sets being a subset of a universal set of character codes;
   content output means (405) for producing and outputting distribution content data being content data to be distributed based on details of described content data; and
   inspecting means (411) for inspecting an inclusion relationship between a set formed of characters included in the content data and said one or more character sets designated by said character set designating means, and outputting information relating to a result of the inspection.
2. The content producing device (301) according to item 1, further comprising:
   character set content information input means (406) for inputting information specifying the character code included in said one or more character sets.
3. The content producing device (301) according to item 2, further comprising:
   default character set storing means (406) for storing information prepared in advance and specifying the character code included in a specific character set.
4. The content producing device (301) according to item 1, wherein
   said inspecting means allows overlap of the character set corresponding to each character set.
5. The content producing device (301) according to item 1, wherein
   said distribution content data includes character set identification information for identifying said one or more character sets designated by said character set designating means.
6. The content producing device (301) according to item 5, wherein
   said distribution content data includes locale identification information for identifying a region of possible use of said distribution content data.
7. The content producing device (301) according to item 6, wherein
   said locale identification information corresponds to said character set identification information.
8. The content producing device (301) according to item 1, wherein
   said distribution content data includes glyph data corresponding to the one or more character codes included in said one or more character sets designated by said character set designating means.
9. The content producing device (301) according to item 1, wherein
   said inspecting means includes usability determining means (1302) for determining whether each of the character codes describing said content data is a character code usable in the character code universal-set or not.
10. The content producing device (301) according to item 9, wherein
   said usability determining means includes a table (3406) bearing each of the character codes in said character code universal-set and corresponding usability/non-usability data indicating whether said character code is usable or not, searches said table based on each of the character codes describing said content data, and performs the determination based on said usability/non-usability data corresponding to said character code.
11. The content producing device according to item 1, further comprising:
   content data inspecting means (1301) for inspecting the content data described by a content producer; and
   content-production-time message output means (1306) for outputting a message when said content data inspecting means (1301) finds a problem by inspection.
12. The content producing device (301) according to item 11, wherein
   the message output by said content-production-time message output means (1306) includes data of a portion related to a problem in said content data.
13. The content producing device (301) according to item 12, wherein
   when said content-production-time message output means (1306) outputs as a message including partial data related to the problem in said content data, said content-production-time message output means expresses the message by using a predetermined another character set for a character included in one or more predetermined character sets of said partial data or a complementary set of said one or more predetermined character sets.
14. The content producing device (301) according to item 13, wherein
   when said content-production-time message output means (1306) outputs the message including the partial data related to the problem in said content data, said content-production-time message output means expresses the message by using, for a character included in the predetermined specific character set of said partial data or the complementary set of the specific character set, a character string including a character string indicating the character code of said character.
15. The content producing device (301) according to item 1, further comprising:
   a content display unit (405) displaying said content data or information based on said content data, wherein
   said content display unit (405) includes displayability determining means (2408) determining whether a character set identified by character set identification information stored in said content data is displayable or not, based on whether glyph data of said character set is usable or not, and
   when said displayability determining means determines the character set displayable, said content display unit performs an operation different from that performed when said character set is determined undisplayable.
16. A content display device (305) for displaying content data or information based on the content data comprising:
   input means (2403) for inputting said content data;
   displayability determining means (2408) for determining, based on whether one or more character sets identified according to one or more items of character set identification information stored in said content data input by said input means has usable glyph data or not, whether said one or more character sets are displayable or not; and
   means for performing an operation different from an operation performed when the one or more character sets are all determined displayable, when said displayability determining means determines that one of said one or more character sets is undisplayable,
17. The content display device (305) according to item 16, wherein
   when one of said one or more character sets is determined undisplayable, display of said content data or information based on said content data is interrupted.
18. The content display device (305) according to item 16, further comprising:
   message output means (2408, 2412) for outputting a message when one of said one or more character sets is determined undisplayble.
19. The content display device (305) according to item 18, wherein
   said message output means (2408, 2412) changes the message according to details of said locale identification information when said one or more character sets are determined undisplayable.
20. The content display device (305) according to item 16, wherein
   when said content display device has not stored the glyph data corresponding to each of said one or more character sets identified according to said character set identification information, an operation of externally obtaining the corresponding glyph data starts.
21. A data processing device (305) comprising:
   data storing means (2405) for storing data to be processed; and
   message output means (2601) for outputting a message based on details of processing during processing of said data read from said data storing means,
   said data includes locale identification information for identifying a region of possible use, and said message output means (2601) changes the message according to said locale identification information.
22. A content display system comprising:
   content producing means (301) for inspecting described content data, and outputting distribution content data based on the described content data; and
   content display means (303) for receiving said distribution content data, and displaying information based on said distribution content data, wherein
   said content producing means includes:
   character set information input means (406, 410) for designating contents of a character set being a subset of a universal set of said character codes and used for describing said content data, and
   means (411) for outputting information relating to an inclusion relationship between a set formed of characters included in said described content data and said character set designated by said character set information input means.
23. A content producing method comprising:
   a character set designating step (S503) of designating one or more character sets each being a subset of a universal set of character codes;
   a content output step (S509) of producing and outputting distribution content data being content data to be distributed based on details of described content data; and
   an inspection step (S507) of inspecting an inclusion relationship between a set formed of characters included in the content data and said one or more character sets designated by said character set designating step, and outputting information relating to a result of the inspection when said distribution content data is produced in said content output step.
24. A program causing a computer to execute a content producing method, wherein
   said content producing method includes:
   a character set designating step (S503) of designating one or more character sets each being a subset of a universal set of character codes;
   a content output step (S509) of producing and outputting distribution content data being content data to be distributed based on details of described content data; and
   an inspection step (S507) of inspecting an inclusion relationship between a set formed of characters included in the content data and said one or more character sets designated by said character set designating step, and outputting information relating to a result of the inspection when said distribution content data is produced in said content output step.
25. A machine-readable record medium storing a program causing a computer to execute a content producing method, wherein
   said content producing method includes:
   a character set designating step (S503) of designating one or more character sets each being a subset of a universal set of character codes;
   a content output step (S509) of producing and outputting distribution content data being content data to be distributed based on details of described content data; and
   an inspection step (S507) of inspecting an inclusion relationship between a set formed of characters included in the content data and said one or more character sets designated by said character set designating step, and outputting information relating to a result of the inspection when said distribution content data is produced in said content output step.
26. A content display method for displaying content data or information based on the content data includes:
   an input step (S2501) of inputting said content data;
   a displayability determining step (S2505) of determining whether at least one or more character sets identified according to at least one or more items of character set identification information stored in said content data input in said input step is displayable or not, based on whether glyph data of said one or more character sets is usable or not; and
   a step (S2508) of performing an operation different from an operation performed when said one or more character sets are all determined displayable, when one of said one or more character sets is determined undisplayable.
27. A program causing a computer to execute a content display method for displaying content data or information based on the content data, wherein
   said content producing method includes:
   an input step (S2501) of inputting said content data;
   a displayability determining step (S2505) of determining whether at least one or more character sets identified according to at least one or more items of character set identification information stored in said content data input in said input step is displayable or not, based on whether glyph data of said one or more character sets is usable or not; and
   a step (S2508) of performing an operation different from an operation performed when said one or more character sets are all determined displayable, when one of said one or more character sets is determined undisplayable.
28. A machine-readable record medium storing a program causing a computer to execute a content display method for displaying content data or information based on the content data, wherein
   said content producing method includes:
   an input step (S2501) of inputting said content data;
   a displayability determining step (S2505) of determining whether at least one or more character sets identified according to at least one or more items of character set identification information stored in said content data input in said input step is displayable or not, based on whether glyph data of said one or more character sets is usable or not; and
   a step (S2508) of performing an operation different from an operation performed when said one or more character sets are all determined displayable, when one of said one or more character sets is determined undisplayable.
29. A data processing method comprising:
   a reading step (S2501) of reading processing target data to be processed from storing portion prepared in advance; and
   a message output step (S2508, S2712) of outputting a message based on details of processing when processing said data read by said reading step, wherein
   said processing target data read by said reading step includes locale identification information for identifying a region of possible use, and the message to be output is changed according to details of said locale identification information in said message output step.
30. A program causing a computer to execute a data processing method, wherein
   said data processing method includes:
   a reading step (S2501) of reading processing target data to be processed from storing portion prepared in advance; and
   a message output step (S2508, S2712) of outputting a message based on details of processing when processing said data read by said reading step, wherein
   said processing target data read by said reading step includes locale identification information for identifying a region of possible use, and the message to be output is changed according to details of said locale identification information in said message output step.
31. A machine-readable record medium storing a program causing a computer to execute a data processing method, wherein
   said data processing method includes:
   a reading step (S2501) of reading processing target data to be processed from storing portion prepared in advance; and
   a message output step (S2508, S2712) of outputting a message based on details of processing when processing said data read by said reading step, wherein
   said processing target data read by said reading step includes locale identification information for identifying a region of possible use, and the message to be output is changed according to details of said locale identification information in said message output step.

## Claims

1. A data processing device (305) comprising:
data storing means (2405) for storing data to be processed: and
message output means (2601) for outputting a message based on details of processing during processing of said data read from said data storing means,
said data includes locale identification information for identifying a region of possible use, and said message output means (2601) changes the message according to said locale identification information.

2. A data processing method comprising:
a reading step (S2501) of reading processing target data to be processed from storing portion prepared in advance; and
a message output step (S2508, S2712) of outputting a message based on details of processing when processing said data read by said reading step, wherein
said processing target data read by said reading step includes locale identification information for identifying a region of possible use, and the message to be output is changed according to details of said locale identification information in said message output step.

3. A program causing a computer to execute a data processing method, wherein said data processing method includes:
a reading step (S2501) of reading processing target data to be processed from storing portion prepared in advance; and
a message output step (S2508, S2712) of outputting a message based on details of processing when processing said data read by said reading step, wherein
said processing target data read by said reading step includes locale identification information for identifying a region of possible use, and the message to be output is changed according to details of said locale identification information in said message output step.

4. A machine-readable record medium storing a program causing a computer to execute a data processing method, wherein
said data processing method includes:
a reading step (S2501) of reading processing target data to be processed from storing portion prepared in advance; and
a message output step (S2508, S2712) of outputting a message based on details of processing when processing said data read by said reading step, wherein
said processing target data read by said reading step includes locale identification information for identifying a region of possible use, and the message to be output is changed according to details of said locale identification information in said message output step.
